(19) Europäisches Patentamt
European Patent Office
Office européen des brevets

(11) **EP 2 294 452 B1**

(12) **FASCICULE DE BREVET EUROPEEN**

(45) Date de publication et mention
de la délivrance du brevet:
**28.12.2011 Bulletin 2011/52**

(21) Numéro de dépôt: **09772709.3**

(22) Date de dépôt: **08.06.2009**

(51) Int Cl.:
***G01S 15/00*** *(2006.01)*

(86) Numéro de dépôt international:
**PCT/FR2009/051080**

(87) Numéro de publication internationale:
**WO 2010/001027 (07.01.2010 Gazette 2010/01)**

(54) **PROCEDE ET DISPOSITIF DE SONDAGE PAR PROPAGATION D'ONDES**

Messverfahren und -Vorrichtung unter Verwendung von Wellenausbreitung

Method and device for measuring using wave propagation

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **09.06.2008 FR 0853821**

(43) Date de publication de la demande:
**16.03.2011 Bulletin 2011/11**

(73) Titulaire: **Centre National de la Recherche Scientifique -
CNRS
75794 Paris Cedex 16 (FR)**

(72) Inventeurs:
• **DERODE, Arnaud
F-75013 Paris (FR)**
• **AUBRY, Alexandre
F-53170 Villiers Charlemagne (FR)**
• **FINK, Mathias
F-92190 Meudon (FR)**

(74) Mandataire: **Cabinet Plasseraud
52, rue de la Victoire
75440 Paris Cedex 09 (FR)**

(56) Documents cités:
**WO-A-2004/086557**

• **BORDIER J M ET AL: "The influence of multiple scattering in incoherent ultrasonic inspection of coarse grain stainless steel" 19911208; 19911208 - 19911211, 8 décembre 1991 (1991-12-08), pages 803-808, XP010093802**

• **MARGARET CHENEY ET AL: "Imaging that exploits multipath scattering from point scatterers; Imaging that exploits multipath scattering from point scatterers" INVERSE PROBLEMS, INSTITUTE OF PHYSICS PUBLISHING, BRISTOL, GB, vol. 20, no. 5, 1 octobre 2004 (2004-10-01), pages 1691-1711, XP020030716 ISSN: 0266-5611**

• **BONNEAU R J: "A Waveform Strategy for Detection of Targets in Multiplicative Clutter" RADAR, 2006 IEEE CONFERENCE ON APRIL 2006, PISCATAWAY, NJ, USA,IEEE, PISCATAWAY, NJ, USA, 1 avril 2006 (2006-04-01), pages 84-93, XP010918339 ISBN: 9780780394964**

• **SCHMIDT R O: "MULTIPLE EMITTER LOCATION AND SIGNAL PARAMETER ESTIMATION" IEEE TRANSACTIONS ON ANTENNAS AND PROPAGATION, IEEE SERVICE CENTER, PISCATAWAY, NJ, US, vol. AP-34, no. 3, 1 mars 1986 (1986-03-01), pages 276-280, XP000644956 ISSN: 0018-926X**

• **SENGUPTA, A.M.; MITRA, P.P.: "Distributions of singular values for some random matrices" PHYS. REV. E, vol. 60, no. 3, septembre 1999 (1999-09), pages 3389-3392, XP007908369 cité dans la demande**

• **PRADA C ET AL: "Flaw detection in solid with the D.O.R.T. method" ULTRASONICS SYMPOSIUM, 1997. PROCEEDINGS., 1997 IEEE TORONTO, ONT., CANADA 5-8 OCT. 1997, NEW YORK, NY, USA,IEEE, US, vol. 1, 5 octobre 1997 (1997-10-05), pages 679-683, XP010271333 ISBN: 9780780341531**

EP 2 294 452 B1

**Description**

La présente invention est relative aux procédés et dispositifs de sondage par propagation d'ondes.

Plus particulièrement, l'invention concerne un procédé de sondage par propagation d'ondes, comprenant :

(a) une étape d'émission au cours de laquelle on fait émettre par un ensemble de transducteurs (c'est-à-dire par tout ou partie des transducteurs de l'ensemble) une onde incidente dans un milieu diffusant pour ladite onde,

(b) une étape de mesure au cours de laquelle on fait capter, par ledit ensemble de transducteurs (c'est-à-dire par tout ou partie des transducteurs de l'ensemble), des signaux représentatifs d'une onde réfléchie réverbérée par le milieu à partir de l'onde incidente, lesdits signaux captés comprenant :

- une composante de diffusion simple, représentative de trajets d'onde où l'onde réfléchie résulte d'une seule réflexion de l'onde incidente par des diffuseurs appartenant au milieu,
- et le cas échéant une composante de diffusion multiple, représentative de trajets d'onde où l'onde réfléchie résulte de plusieurs réflexions successives de l'onde incidente sur les diffuseurs du milieu avant d'atteindre l'ensemble de transducteurs,

(c) une étape de traitement au cours de laquelle on traite lesdits signaux captés en vue de déterminer des caractéristiques du milieu (les caractéristiques en question peuvent consister en une image du milieu, et/ou une valeur d'un paramètre du milieu, et/ou la présence ou non d'un point singulier tel qu'une hétérogénéité, etc.).

L'étape de traitement susmentionnée permet par exemple de mesurer un paramètre caractéristique du milieu, et/ou de détecter un point singulier du milieu, et/ou de réaliser une image du milieu.

Les procédés de ce type sont utilisés notamment dans les systèmes de détection et d'imagerie, comme par exemple les sonars, les radars, les échographes etc.

Dans les procédés connus de ce type et notamment dans les procédés d'imagerie échographique ou radar, on utilise la composante de diffusion simple des signaux captés : si chaque diffuseur n'interagit qu'une seule fois avec l'onde, il y a en effet une équivalence directe entre le temps d'arrivée de chaque écho et la distance séparant le transducteur et le diffuseur ayant engendré cet écho. La détection d'un écho à un instant donné est le signe de la présence d'un diffuseur à la distance correspondant au temps d'arrivée de l'écho. Une image de la réflectivité du milieu, c'est-à-dire de la position des différents diffuseurs au sein du milieu, peut alors être le cas échéant construite à partir des signaux captés.

En revanche, la diffusion multiple n'est pas utilisée dans les méthodes d'imagerie échographiques ou radar. Bien au contraire, ces méthodes d'imagerie reposent sur l'hypothèse que cette diffusion multiple est négligeable. Or, en présence d'une composante importante de diffusion multiple, notamment lorsque les diffuseurs contenus dans le milieu ont un pouvoir diffusant élevé et/ou sont très denses à l'intérieur du milieu, les méthodes d'imagerie classiques sont fortement perturbées et ne sont plus fiables. En effet, dans ce cas, il n'y a plus d'équivalence entre le temps d'arrivée d'un d'écho et distance séparant un transducteur et un diffuseur du milieu, ce qui ne permet pas de bâtir une image du milieu.

La présente invention a notamment pour but de perfectionner les procédés de sondage tels que définis ci-dessus, de façon à prendre en compte la composante de diffusion multiple.

A cet effet, selon l'invention, au cours de l'étape de traitement, on extrait au moins une composante choisie parmi la composante de diffusion multiple et la composante de diffusion simple, par filtrage d'au moins une matrice de transfert fréquentielle représentative des réponses entre transducteurs de l'ensemble de transducteurs, l'étape de traitement (c) comportant au moins les sous-étapes suivantes :

(c1) une sous-étape de détermination de matrice de transfert fenêtrée au cours de laquelle on détermine au moins une matrice de transfert fréquentielle fenêtrée $K(T,f)=[k_{ij}(T,f)]$ correspondant à une matrice temporelle fenêtrée de réponse inter-éléments $K(T,t)=[k_{ij}(T,t)]$, ladite matrice temporelle fenêtrée de réponse inter-éléments correspondant, sur une fenêtre temporelle voisine d'un temps T et de durée $\Delta t$, aux réponses temporelles $h_{ij}(t)$ entre transducteurs de l'ensemble de transducteurs, f étant la fréquence,

(c3) une sous-étape de filtrage au cours de laquelle on sépare la composante de diffusion multiple de la composante de diffusion simple dans chaque matrice de transfert fréquentielle fenêtrée $K(T,f)$ en fonction de la cohérence des coefficients $k_{ij}(T,f)$ de la matrice de transfert fréquentielle fenêtrée $K(T,f)$ sur chaque antidiagonale de ladite matrice de transfert fréquentielle fenêtrée $K(T,f)$.

On peut mettre à profit cette séparation, par exemple :

- pour utiliser uniquement la composante de diffusion simple en vue de bâtir une image du milieu,
- ou encore pour déterminer un paramètre caractéristique du milieu à partir de la composante de diffusion multiple, etc.

On notera que l'invention est applicable lorsque les signaux captés ne comportent pas effectivement de composante de diffusion multiple : l'invention permet en effet alors de déterminer que la diffusion multiple est nulle, ce qui peut fournir une indication utile pour caractériser le milieu sondé. De plus, même en l'absence de contribution de diffusion multiple significative, l'invention permet d'éliminer en bonne partie le bruit et les effets d'aberration dans les signaux captés lorsqu'on extrait la contribution de diffusion simple, ce qui peut s'avérer extrêmement utile.

Dans divers modes de réalisation du procédé selon l'invention, on peut éventuellement avoir recours en outre à l'une et/ou à l'autre des dispositions suivantes :

- la composante de diffusion multiple est non nulle ;
- au cours de l'étape de traitement (c), on extrait la composante de diffusion simple et on utilise ladite composante de diffusion simple pour détecter (et généralement localiser) au moins un point singulier dans le milieu ;
- au cours de l'étape de traitement (c), on réalise une image du milieu à partir de ladite composante de diffusion simple ;
- au cours de l'étape de traitement (c), on détermine ladite composante de diffusion simple sous forme d'une matrice temporelle filtrée de réponse inter-éléments $H^F$, représentative des réponses entre transducteurs de l'ensemble de transducteurs, et on réalise l'image du milieu par formation de voie à partir de ladite matrice temporelle filtrée de réponse inter-éléments $H^F$;
- au cours de l'étape de traitement (c), on détermine ladite composante de diffusion simple sous forme d'au moins une matrice de transfert fréquentielle filtrée $K^F$, représentative des réponses entre transducteurs de l'ensemble de transducteurs, et on réalise l'image du milieu par la méthode de décomposition de l'opérateur de retournement temporel $K^{F*}.K^F$, où $K^{F*}$ est la matrice conjuguée complexe de ladite matrice de transfert fréquentielle filtrée $K^F$;
- au cours de l'étape de traitement (c), on extrait la composante de diffusion multiple et on calcule à partir de ladite composante de diffusion multiple, un indice de fiabilité représentatif de l'importance de la diffusion simple dans le milieu ;
- au cours de l'étape de traitement (c), on réalise une image du milieu et on quantifie la fiabilité de ladite image en fonction dudit indice de fiabilité ;
- au cours de l'étape de traitement (c), on calcule en plusieurs points ledit indice de fiabilité et on quantifie la fiabilité de plusieurs parties de l'image correspondant auxdits plusieurs points, en fonction dudit indice de fiabilité ;
- au cours de l'étape de traitement (c), on sépare la composante de diffusion multiple de la composante de diffusion simple par filtrage d'au moins une matrice de transfert fréquentielle représentative des réponses entre transducteurs de l'ensemble de transducteurs ;
- au cours de la sous-étape de filtrage (c3), on extrait une composante de diffusion simple $k^3_{ij}(T,f)$ de chaque coefficient $k_{ij}(T,f)$ de la matrice $K(T,f)$, telle que les composantes de diffusion simple $k^s_{ij}(T,f)$ soient cohérentes entre elles sur chaque antidiagonale de ladite matrice $K(T,f)$ ;
- au cours de la sous-étape de filtrage (c3), on extrait une composante de diffusion multiple $k^M_{ij}(T,f)$ de chaque coefficient $k_{ij}(T,f)$ de la matrice $K(T,f)$ (cette composante est telle que lesdites composantes de diffusion multiples $k^M_{ij}(T,f)$ soient aléatoires) ;
- l'ensemble de transducteurs comporte au moins un nombre N de transducteurs et la matrice de transfert fréquentielle fenêtrée $K(T,f)$ est une matrice de dimension $N*N$ ;
- au cours de la sous-étape (c1) de détermination de matrice de transfert fenêtrée, on détermine plusieurs matrices de transfert fenêtrées $K(T,f)$ pour plusieurs valeurs de T et on procède à la sous-étape de filtrage (c3) pour chacune des matrices de transfert fenêtrées $K(T,f)$ ;
- les fenêtres temporelles des différentes matrices de transfert fenêtrées $K(T,f)$ sont jointives (lesdites fenêtres temporelles peuvent soit être adjacentes, soit se recouvrir mutuellement),
- au cours de la sous-étape (c1) de détermination de matrice de transfert fenêtrée, on détermine chaque matrice fréquentielle fenêtrées $K(T,f)$ par transformée de Fourier d'une matrice temporelle fenêtrée $K(T,t)$ correspondant, sur ladite fenêtre temporelle voisine du temps T et de durée $\Delta t$, aux réponses temporelles $h_{ij}(t)$ entre transducteurs de l'ensemble de transducteurs ;
- dans le procédé :

  - l'étape de traitement (c) comporte en outre une sous-étape de rotation de données (c2), qui est intermédiaire entre la sous-étape (c1) de détermination de matrice de transfert fenêtrée et la sous-étape (c3) de filtrage, et au cours de laquelle on calcule deux matrices $A1(T,f)=[a1_{uv}(T,f)]$ et $A2=[a2_{uv}(T,f)]$ à partir de $K(T,f)$, où :

$$a1_{uv}(T,f)=k_{u+v-1,\ v-u+2M-1}(T,f),$$

$$a2_{uv}(T,f)=k_{u+v,\ v-u+2M-1}(T,f),$$

$$M=(N+3)/4,$$

N est une plus petite dimension de la matrice de transfert K(T,f) et est choisi pour que M soit entier,
- au cours de la sous-étape de filtrage (c3), on sépare la composante de diffusion multiple de la composante de diffusion simple dans chacune des matrices Ar, r étant un indice égal à 1 ou 2, et on obtient ainsi au moins deux matrices filtrées $Ar^F$ correspondant respectivement aux matrices Ar et représentatives chacune, soit de la composante de diffusion simple, soit de la composante de diffusion multiple,
- l'étape de traitement (c) comporte en outre une sous-étape de rotation de données inverse (c4), qui est postérieure à la sous-étape de filtrage (c3), et au cours de laquelle on calcule une matrice de transfert fenêtrée filtrée $K^F(T,f)=[k^F_{ij}(T,f)]$, où :
- lorsque i-j est pair : $k^F_{ij}(T,f)=a1^F_{(i-j)/2+M,\ (i+j)/2}$,
- lorsque i-j est impair : $k^F_{ij}(T,f)=a2^F_{(i-j-1)/2M,\ (i+j-1)/2}$ ;

- au cours de la sous-étape de filtrage (c3), on calcule les deux matrices $Ar^F$ par la formule :
  $Ar^F = S^t\ S^*Ar$, où :

  - $S=[s_u]$ est un vecteur colonne, $^tS^*$ étant la transposée du vecteur conjugué du vecteur S,

  - les composantes $S_u$ du vecteur S sont des nombres complexes égaux à :

$$s_u = \exp\left\{j\frac{k}{2R}y_u^2\right\}\bigg/\sqrt{L}\ ,$$

  - k est le nombre d'onde,
  - R=c.T/2,

  - $y_u = \left(x_i - x_j\right)\big/\sqrt{2}$ , avec u=(i-j)/2+M si r=1 et u=(i-j-1)/2+M si r=2,

  - $x_i$ et $x_j$ sont les abscisses des transducteurs d'indices i et j selon un axe X, l'ensemble de transducteurs s'étendant au moins selon ledit axe X,
  - L=2M-1 pour r=1 et L=2M-2 pour r=2,

  lesdites matrices $Ar^F$ étant représentatives de la composante de diffusion simple ;
- au cours de la sous-étape de filtrage (c3) :

  - on décompose en valeurs singulières chacune des matrices Ar en déterminant ainsi, pour chacune des matrices Ar, M valeurs singulières $\lambda_{i,r}$, i étant un indice compris entre 1 et M, les valeurs singulières étant ordonnées par ordre décroissant pour i croissant,
  - pour chaque matrice Ar, on attribue à la diffusion simple p valeurs singulières les plus importantes $\lambda_{1,r}$, à $\lambda_{p,r}$, p étant compris entre 1 et M, et on attribue à la diffusion multiple les éventuelles autres valeurs singulières non nulles ;

- la détermination des p valeurs singulières attribuées à la diffusion simple est effectuée de manière itérative, comme suit :

  (c31) on fixe initialement q = 1;

(c32) on calcule une valeur singulière normalisée à partir de $\tilde{\lambda}_{q.r} = \dfrac{\lambda_{q.r}}{\sqrt{\dfrac{1}{Mr+1-q}\sum\limits_{m=q}^{Mr}\lambda_{m.r}^2}}$ , avec Mr=M si r=1 et Mr=M-1 si r=2,

(c33) si $\tilde{\lambda}_{q.r}$ est au moins égal à une valeur seuil prédéterminée $\tilde{\lambda}_{max}$, on attribue $\tilde{\lambda}_{q.r}$ à la diffusion simple et on réitère la sous-étape (c32) en incrémentant q d'une unité,

(c34) si $\tilde{\lambda}_{q.r}$ est inférieur à la valeur seuil $\tilde{\lambda}_{max}$, on attribue $\tilde{\lambda}_{q.r}$ et les éventuelles valeurs singulières suivantes à la diffusion multiple ;

- lesdites ondes sont choisies parmi les ondes mécaniques et les ondes électromagnétiques.

Par ailleurs, l'invention a également pour objet un dispositif pour la mise en oeuvre d'un procédé de sondage tel que défini ci-dessus, comprenant un ensemble de transducteurs adaptés pour émettre une onde incidente dans un milieu diffusant et pour capter des signaux représentatifs d'une onde réfléchie réverbérée par le milieu à partir de l'onde incidente, lesdits signaux captés comprenant :

- une composante de diffusion simple, représentative de trajets d'onde où l'onde réfléchie résulte d'une seule réflexion de l'onde incidente par chaque diffuseur du milieu,
- et le cas échéant une composante de diffusion multiple, représentative de trajets d'onde où l'onde réfléchie résulte de plusieurs réflexions successives de l'onde incidente sur les diffuseurs du milieu avant d'atteindre l'ensemble de transducteurs,
  ledit dispositif comportant en outre des moyens de traitement adaptés pour traiter lesdits signaux captés en vue de déterminer des caractéristiques du milieu, caractérisé en ce que les moyens de traitement sont adaptés pour extraire au moins une composante choisie parmi la composante de diffusion multiple et la composante de diffusion simple, par filtrage d'au moins une matrice de transfert fréquentielle représentative des réponses entre transducteurs de l'ensemble de transducteurs, les moyens de traitement étant adaptés pour :
- déterminer une matrice de transfert fenêtrée, en déterminant au moins une matrice de transfert fréquentielle fenêtrée $K(T,f)=[k_{ij}(T,f)]$ correspondant à une matrice temporelle fenêtrée de réponse inter-éléments $K(T,t)=[k_{ij}(T,t)]$, ladite matrice temporelle fenêtrée de réponse inter-éléments correspondant, sur une fenêtre temporelle voisine d'un temps T et de durée $\Delta t$, aux réponses temporelles $h_{ij}(t)$ entre transducteurs de l'ensemble de transducteurs, f étant la fréquence,
- séparer par filtrage la composante de diffusion multiple de la composante de diffusion simple dans chaque matrice de transfert fréquentielle fenêtrée $K(T,f)$ en fonction de la cohérence des coefficients $k_{ij}(T,f)$ de la matrice de transfert fréquentielle fenêtrée $K(T,f)$ sur chaque antidiagonale de ladite matrice de transfert fréquentielle fenêtrée $K(T,f)$.

D'autres caractéristiques et avantages de l'invention apparaîtront au cours de la description suivante de plusieurs de ses modes de réalisation, donnés à titre d'exemples non limitatifs, en regard des dessins joints.

Sur les dessins :

- la figure 1 est une vue schématique d'un dispositif pour la mise en oeuvre d'un procédé selon un mode de réalisation de l'invention,
- la figure 2 est un schéma représentant deux chemins de diffusion simple contribuant au champ rétrodiffusé par le milieu sondé au temps T=2R/c dans l'exemple de la figure 1,
- la figure 3 est un schéma représentant deux chemins de diffusion multiple contribuant au champ rétrodiffusé par le milieu sondé au temps T=2R/c dans l'exemple de la figure 1,
- les figures 4 et 5 illustrent une sous-étape de rotation de données appartenant à un mode de réalisation du procédé selon l'invention, au cours de laquelle on extrait deux matrices A1 et A2 de chaque matrice fréquentielle de transfert fenêtrée K,
- la figure 6 illustre une sous-étape de rotation de données inverse au cours de laquelle on détermine une matrice de transfert filtrée $K^F$ à partir des matrices A1 et A2 susmentionnées, après filtrage desdites matrices,
- la figure 7 illustre un processus itératif utilisable pour le filtrage des matrices A1 et A2 par décomposition en valeurs singulières,
- la figure 8 illustre un dispositif expérimental utilisé une expérience de détection de cible en milieu diffusant,
- les figures 9 et 10 sont des exemples d'image du milieu de la figure 8, obtenues par échographie classique (avec une échelle de gris linéaire pour la figure 9 et une échelle logarithmique pour la figure 10),
- les figures 11 et 12 sont des graphes distance-fréquence où l'échelle de gris montre la première valeur singulière normalisée en fonction de la fréquence f et de la distance R par rapport à l'ensemble de transducteurs dans le dispositif de la figure 8, après filtrage par décomposition en valeurs singulières (sans effet de seuil sur la figure 11 et en se limitant aux valeurs singulières supérieures à un seuil prédéterminé sur la figure 12),

- la figure 13 est une image du milieu reconstituée par repropagation numérique des vecteurs propres, après décomposition en valeurs singulières de l'opérateur de retournement temporel,
- la figure 14 est un graphe donnant l'amplitude normalisée A des pixels de l'image du milieu du dispositif de la figure 8, dans un plan perpendiculaire à l'axe Z et passant par la cible, en échographie classique et après un filtrage par décomposition en valeurs singulières selon un mode de réalisation de l'invention,
- la figure 15 est un graphe donnant la courbe mesurée de l'intensité simplement diffusée $I^S$ (X=0, T) (représentée par des points en forme de petits cercles) et la courbe théorique de cette intensité pour un libre parcours d'extinction $l_{ext}$=50 mm,
- la figure 16 est un graphe similaire (en échelle logarithmique) donnant la courbe mesurée de l'intensité multiplement diffusée $I^M$(X=0, T) (représentée par des points en forme de petits cercles) et la courbe théorique de cette intensité pour quatre valeurs de libre parcours moyen élastique $l_e$, ces courbes étant normalisées par le maximum de $I^S$,
- et la figure 17 est une image échographique de tissus humains, couplée à un graphe dont le niveau de gris donne la valeur d'un indice de fiabilité fondé sur l'importance relative de la diffusion multiple.

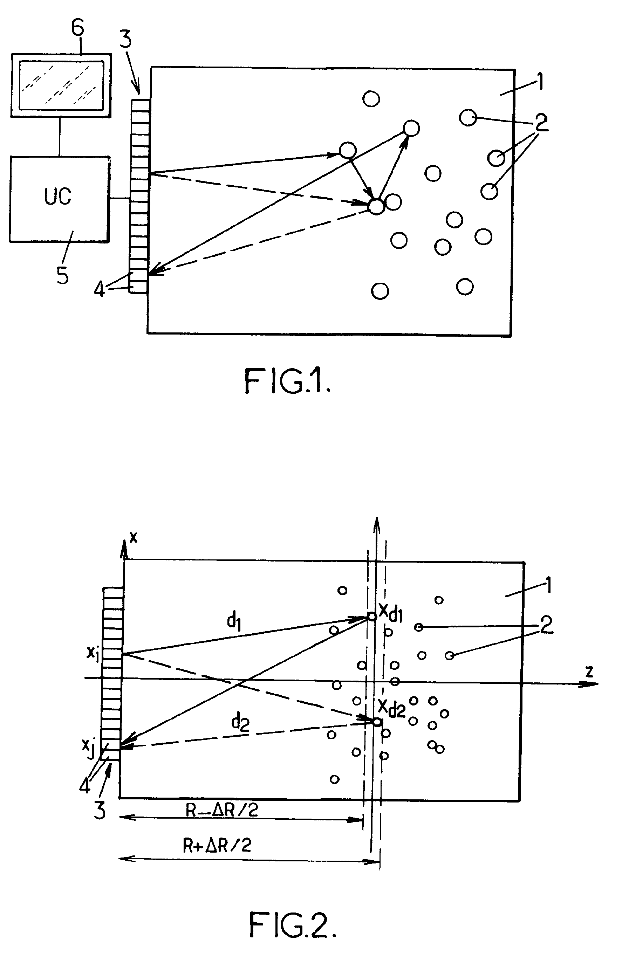

La figure 1 montre un exemple de dispositif adapté pour sonder un milieu 1 par émission et réception d'ondes. L'invention sera décrite plus particulièrement ci-après dans le cas où les ondes en question sont des ondes ultrasonores (par exemple de fréquences comprises entre 2 et 4 MHz), mais l'invention est également applicable à des ondes de toute nature, par exemple des ondes mécaniques autres que des ondes ultrasonores de compression, des ondes électromagnétiques, ou autres.

Le milieu 1 est diffusant pour les ondes considérées, c'est-à-dire qu'il est hétérogène et/ou contient des diffuseurs 2 répartis de manière aléatoire et capables de réfléchir les ondes émises dans le milieu 1.

Le milieu 1 en question peut être par exemple une partie du corps humain, et les diffuseurs 2 peuvent être notamment des particules de petite taille, non résolues, contenues dans le milieu 1 (en échographie de tels diffuseurs engendrent des images dites de «speckle»). Bien entendu, le milieu 1 à sonder pourrait être autre, par exemple une partie d'un objet industriel dont on souhaite contrôler la structure dans le cadre d'un contrôle non destructif.

Le dispositif de sondage représenté sur la figure 1 comporte un ensemble 3 de transducteurs 4, par exemple un réseau linéaire de transducteurs ultrasonores pouvant se présenter classiquement sous la forme d'une barrette rigide mise en contact avec le milieu 1. Cet ensemble 3 comporte un nombre N de transducteurs, N pouvant par exemple être compris entre 100 et 500. On peut par exemple utiliser une barrette d'une centaine de transducteurs 4 ayant chacun une largeur d'environ de largeur 0.39 mm. On notera que les transducteurs 4 sont ici des transducteurs ultrasonores capables de transformer un signal électrique en ondes ultrasonores de compression ou inversement, mais au sens du présent brevet, on appellera transducteur plus généralement tout dispositif capable de transformer un signal électrique en une onde de quelque nature que ce soit (onde mécanique, onde électromagnétique, etc.) et inversement.

Chaque transducteur 4 de l'ensemble 3 peut être commandé individuellement par une unité centrale 5 (UC) comprenant par exemple des moyens des moyens numériques de traitement de signaux, cette unité centrale 5 pouvant par exemple être adaptée pour présenter une image du milieu 1 sur un écran 6.

Pour sonder le milieu 1, l'unité centrale 5 envoie aux transducteurs 4 des signaux électriques qui sont transformés par lesdits transducteurs en ondes émises dans le milieu 1, en l'occurrence des ondes ultrasonores de compression, et ces ondes sont partiellement réfléchies par les diffuseurs 2 contenus dans le milieu. Une partie des ondes diffusées (ou échos) revient ainsi vers les transducteurs 4 qui les captent et les transforment en signaux électriques de réception traités ensuite par l'unité centrale 5.

Ces ondes reviennent vers les transducteurs 4 :

- soit après avoir été réfléchies une seule fois par les diffuseurs 2 (par exemple selon le trajet schématisé en traits pointillés sur la figure 1), c'est à dire après avoir subi une diffusion simple,
- soit après avoir été réfléchies successivement sur plusieurs diffuseurs 2 (par exemple selon le trajet schématisé en trait plein sur la figure 1), c'est-à-dire après avoir subi une diffusion multiple.

L'onde totale diffusée par le milieu 1 et renvoyée vers les transducteurs 4, comprend donc deux contributions :

- une contribution dite «de diffusion simple», correspondant aux cas où l'onde incidente ne subit qu'une seule réflexion par chaque diffuseur 2 du milieu 1 avant de revenir vers les transducteurs 4,
- une contribution dite «de diffusion multiple», correspondant aux cas où l'onde incidente subit plusieurs réflexions successives sur les diffuseurs 2 du milieu avant d'atteindre les transducteurs 4.

La présente invention permet de séparer ces deux contributions par filtrage, afin d'utiliser seulement l'une d'entre elle ou de les traiter séparément. Par exemple :

- la contribution de diffusion simple est utile pour construire une image du milieu, notamment par échographie dans le cas décrit ici (mais il pourrait s'agir aussi d'une image sismographique dans le cas d'ondes sismiques, ou une image radar dans le cas d'ondes électromagnétiques, ou autres) : en effet, puisque chaque diffuseur 2 n'interagit qu'une seule fois avec l'onde incidente, il y a une équivalence directe entre le temps d'arrivée de chaque écho et la distance séparant le capteur et le diffuseur ayant engendré cet écho. La détection d'un signal écho à un instant donné est le signe de la présence d'un diffuseur 2 à la distance correspondant au temps d'arrivée de l'écho. Une image de la réflectivité du milieu, c'est-à-dire de la position des différentes cibles diffusantes au sein du milieu, peut alors être construite à partir des signaux enregistrés ;
- la contribution de diffusion multiple peut également être utile à des fins de caractérisation des milieux désordonnés, car elle permet de mesurer des paramètres statistiques comme le libre parcours moyen ou le coefficient de diffusion d'une onde se propageant à travers un milieu aléatoire ; l'importance relative de cette contribution de diffusion multiple permet également de caractériser la fiabilité d'une image du milieu 1, obtenue par exemple par échographie.

Afin de séparer les contributions de diffusion simple et de diffusion multiple, on enregistre tout d'abord les réponses inter-éléments de chaque paire de transducteurs 4 de l'ensemble 3.

A cet effet, comme représenté sur la figure 2, une onde incidente correspondant à un signal impulsionnel est envoyée depuis chaque transducteur n°$i$ de l'ensemble 3 (d'abscisse $x_i$) au cours d'une **étape d'émission (a)** et l'onde rétrodiffusée (réverbérée) par le milieu suite à l'émission de cette onde incidente, est enregistrée par chaque transducteur n°$j$ (d'abscisse $x_j$) au cours d'une **étape de mesure (b)**. Au cours de cette opération, chaque transducteur j capte un signal temporel $h_{ij}(t)$ suite à une émission par le transducteur i. Cette opération est réalisée pour tous les couples émetteurs/récepteurs possibles de l'ensemble 3, c'est-à-dire en pratique pour tous les couples de transducteurs 4.

L'ensemble des $N^2$ réponses forme une matrice temporelle de réponse inter-éléments H(t)=[$h_{ij}(t)$] matrice carrée de dimension N*N, qui est la réponse globale du milieu 1. On notera que la matrice temporelle de réponse inter-éléments H(t) peut éventuellement être acquise plus rapidement, sans faire émettre un signal impulsionnel successivement par chaque transducteur i de l'ensemble 3, en procédant par exemple comme enseigné dans le document WO-A-2004/086557.

Les signaux $h_{ij}(t)$ sont numérisés (par exemple sur 9 bits, ou autre), échantillonnés (par exemple avec un échantillonnage à 20 MHz pour des ondes ultrasonores) et enregistrés par l'unité centrale 5.

L'unité centrale 5 procède ensuite à une **étape de traitement (c),** comprenant une **sous-étape initiale (c1) de détermination de matrice de transfert fenêtrée.**

Au cours de cette sous-étape (c1), chaque réponse impulsionnelle $h_{ij}(t)$ est d'abord tronquée (fenêtrée) en fenêtres de temps successives, de durée $\Delta t$.

On obtient ainsi une série de matrices temporelles fenêtrées K(T,t)=[$k_{ij}(T,t)$] de dimension N*N, où $k_{ij}(T,t)$ est la contribution à $h_{ij}(t)$ correspondant à la fenêtre de temps [T-$\Delta t$/2 ; T+$\Delta t$/2], soit :

$$k_{ij}(T,t) = h_{ij}(t) \times W_R(t - T) \qquad (1)$$

avec :

- $W_R(t)=1$ pour $t \, \varepsilon$ [-$\Delta t$/2 ; +$\Delta t$/2] et $W_R(t)=0$ partout ailleurs,
- R=c.T/2 est une distance mesurée depuis l'ensemble 3 de transducteurs (voir la figure 2), selon un axe z perpendiculaire à la direction longitudinale x dudit ensemble de transducteurs (constituant un réseau linéaire dans l'exemple considéré ici),
- c est la célérité de l'onde dans le milieu 1 (soit dans le cas particulier des ultrasons dans l'eau ou dans des tissus mous du corps humain, c=1.5 mm/$\mu$s),
- $\Delta t$ est une durée prédéterminée correspondant à une distance AR=c.$\Delta t$ parcourue par l'onde, les intervalles de temps susmentionnés [T-$\Delta t$/2 ; T+$\Delta t$/2] pouvant avantageusement être jointifs, c'est-à-dire recouvrir entièrement une période de temps déterminée (autrement dit, le traitement effectué couvre une profondeur de champ, c'est-à-dire une plage de valeurs de R qui est également continue).

Au cours de la sous-étape (c1), on procède ensuite à une transformée de Fourier discrète des coefficients de la matrice K(T,t), pour obtenir ainsi pour chaque valeur de T, une matrice de transfert de dimension N*N que l'on appellera matrice de transfert fréquentielle fenêtrée K(T,f)=[$k_{ij}(T,f)$], où $k_{ij}(T,f)$ est la transformée de Fourier discrète de $k_{ij}(T,t)$ et f est la fréquence.

A partir de ces matrices de transfert fréquentielles fenêtrées K(T,f), on peut séparer les contributions de diffusion simple et multiple, par filtrage, au cours d'une **sous-étape ultérieure de filtrage (c3)** appartenant à l'étape de traitement (c).

En particulier, au cours de cette sous-étape ultérieure de filtrage (c3), on peut séparer la composante de diffusion multiple de la composante de diffusion simple dans chaque matrice de transfert fréquentielle fenêtrée K(T,f) en fonction de la cohérence des coefficients $k_{ij}(T,f)$ de la matrice de transfert fréquentielle fenêtrée K(T,f) sur chaque antidiagonale de ladite matrice de transfert fréquentielle fenêtrée K(T,f) (on appelle antidiagonale un alignement de coefficients $k_{ij}(T,f)$ de ladite matrice, tel que i+j soit constant).

En effet, les ondes simplement diffusées présentent une cohérence particulière selon les antidiagonales de la matrice K(T,f) alors que les ondes multiplement diffusées ont un aspect aléatoire et ne présentent pas de direction de cohérence privilégiée dans ladite matrice K(T,f). En filtrant judicieusement ces antidiagonales, les deux contributions peuvent ainsi être séparées.

Cette propriété peut être expliquée comme suit.

Chacune des réponses impulsionnelles $h_{ij}(t)$ peut se décomposer sous la forme suivante :

$$h_{ij}\left(t\right) = h_{ij}^{S}\left(t\right) + h_{ij}^{M}\left(t\right) \quad (2)$$

où $h_{ij}^{S}(t)$ et $h_{ij}^{M}(t)$ correspondent respectivement aux signaux issus de la diffusion simple (S) et de la diffusion multiple (M).

De la même manière, les coefficients $k_{ij}(T,f)$ de la matrice de transfert fréquentielle fenêtrée K(T,f) peuvent se décomposer chacun sous la forme $k_{ij}(T,f) = k_{ij}^{S}(T,f) + k_{ij}^{M}(T,f)$, où $k_{ij}^{S}(T,f)$ est la contribution de diffusion simple et $k_{ij}^{M}(T,f)$ est la contribution de diffusion multiple.

Chaque contribution $k_{ij}^{S}(T,f)$ peut être considérée comme la somme d'ondes partielles associées à plusieurs chemins de diffusion simple dont deux exemples (chemins $d_1$ et $d_2$) sont représentés sur la figure 2. Les ondes simplement diffusées qui parviennent au réseau de capteurs dans la fenêtre de temps [T-Δt/2 ; T+Δt/2] correspondent à la réflexion de l'onde initiale sur des diffuseurs situés dans une zone du milieu d'épaisseur AR=c.At, à la profondeur R=cT/2.

On parle de «volume isochrone» pour désigner l'ensemble des points qui, à un instant T donné, contribuent au signal capté sur le réseau. En réalité, le volume isochrone n'est pas exactement une tranche parallèle à la surface de la barrette mais résulte de la superposition d'ellipses ayant pour foyers l'élément émetteur (i) et l'élément récepteur (j). En champ lointain, c'est-à-dire lorsque R est suffisamment grand, on assimile le volume isochrone à une tranche d'épaisseur $\Delta R$ parallèle au réseau et distant de celui-ci de *R=cT/2.*

La réponse $k_{ij}^{S}$ entre les éléments *i* et *j* peut se décomposer en une somme d'ondes partielles issues de la réflexion sur les $N_d$ diffuseurs du volume isochrone. A deux dimensions, dans le cadre de l'approximation paraxiale, on peut écrire $k_{ij}^{S}(T,f)$ sous la forme suivante :

$$k_{ij}^{S}(T,f) = \frac{\exp(2jkR)}{R} \sum_{d=1}^{N_d} A_d \exp\left\{ j\frac{k}{2R}\left[(x_i - X_d)^2 + (x_j - X_d)^2\right]\right\} \quad (3)$$

où l'entier *d* désigne le d[ème] chemin de diffusion simple contribuant au signal reçu au temps *T, $X_d$* est la position transverse du diffuseur *d (selon l'axe X)*, *k* est le nombre d'onde dans le milieu ambiant (k=2π/λ, λ étant la longueur d'onde) et $A_d$ est une amplitude caractérisant la réflectivité du diffuseur *d*.

On notera que dans l'équation (3) ci-dessus et dans les autres équations de la présente demande de brevet, j est le nombre imaginaire tel que j²=-1 tant qu'il n'est pas en indice, mais désigne la position d'un élément de matrice lorsqu'il est en indice.

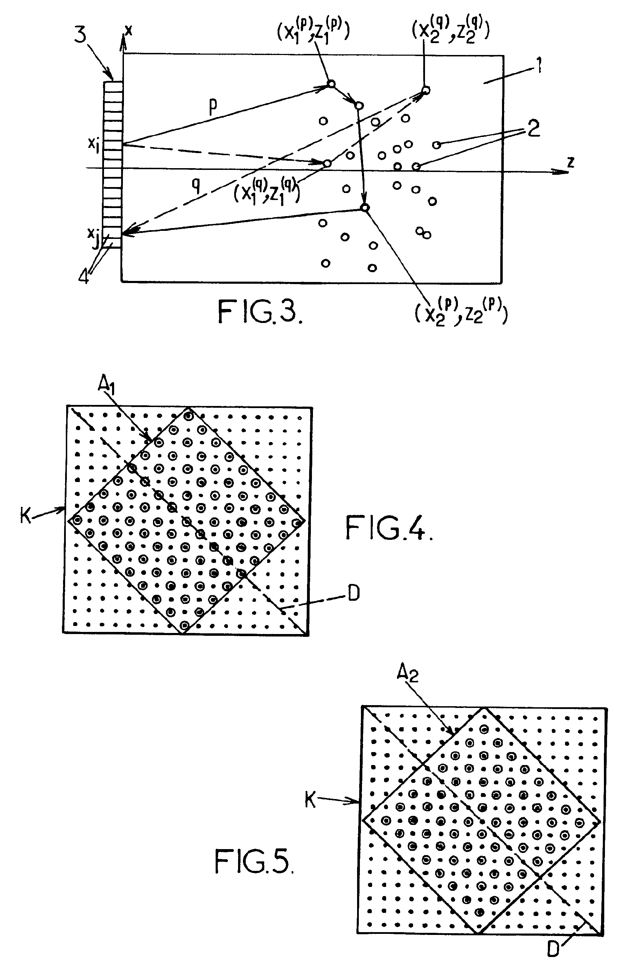

La contribution de diffusion multiple peut elle aussi se décomposer en ondes partielles correspondant à des chemins de diffusion multiple de longueur comprise dans l'intervalle [R-ΔR/2 ; R+ΔR/2], comme représenté sur la figure 3 (pour deux chemins d'indices p et q).

On peut écrire $k_{ij}^{M}\left(T,f\right)$ sous la forme suivante :

$$k_{ij}^{M}(T,f) = \sum_{p=1}^{N_p} \frac{\exp\left[jk\left(Z_1^{(p)} + Z_2^{(p)}\right)\right]}{\sqrt{Z_1^{(p)} Z_2^{(p)}}} B_p \exp\left\{j\frac{k}{2Z_1^{(p)}}\left(x_i - X_1^{(p)}\right)^2\right\} \exp\left\{j\frac{k}{2Z_2^{(p)}}\left(x_j - X_2^{(p)}\right)^2\right\}$$

$$(4)$$

où l'entier p désigne l'indice du chemin de diffusion multiple considéré. Les couples $\left(X_1^{(p)}, Z_1^{(p)}\right)$ et $\left(X_2^{(p)}, Z_2^{(p)}\right)$ désignent respectivement les coordonnées du premier et du dernier diffuseur du chemin *p* dans l'exemple représenté sur la figure 3. $B_p$ correspond à l'amplitude complexe de l'onde partielle liée au chemin *p*, depuis le premier événement de diffusion $\left(X_1^{(p)}, Z_1^{(p)}\right)$ jusqu'au dernier $\left(X_2^{(p)}, Z_2^{(p)}\right)$.

Bien que la répartition des diffuseurs 2 dans le milieu 1 soit totalement aléatoire et sans corrélation entre diffuseurs, le signal associé à la diffusion simple $k_{ij}^{S}$ présente une cohérence particulière, contrairement à la contribution de diffusion multiple. En effet, l'équation (3) peut se réécrire sous la forme :

$$k_{ij}^{S}(T,f) = \underbrace{\frac{\exp(2jkR)}{R}\exp\left\{j\frac{k}{4R}\left(x_i - x_j\right)^2\right\}}_{\text{contribution déterministe}} \times \underbrace{\sum_{d=1}^{N_d} A_d \exp\left\{j\frac{k}{4R}\left[\left(x_i + x_j - 2X_d\right)^2\right]\right\}}_{\text{contribution aléatoire}}$$

$$(5)$$

Le terme apparaissant devant la somme de l'équation (5) est indépendant de la répartition exacte des diffuseurs, il s'agit donc d'une contribution déterministe, qui caractérise la diffusion simple. Le terme de droite est aléatoire, car il dépend explicitement de la position des diffuseurs.

A contrario, le signal lié à la diffusion multiple (Equation 4) ne peut pas s'écrire ainsi.

Cette propriété des signaux issus de la diffusion simple se traduit par une cohérence particulière suivant les antidiagonales de chaque matrice K(T,f), comme l'illustre la figure 4. En effet, le long de chaque antidiagonale, c'est-à-dire pour les couples émetteur(i)/récepteur(j) tels que i+j=constante, la contribution aléatoire de $k_{ij}^{S}$ est constante.

Pour un milieu diffuseur donné, en régime de diffusion simple, il existe donc une relation de phase déterministe entre les coefficients de chaque matrice K(T,f) situés sur la même antidiagonale.

En revanche, en régime de diffusion multiple, cette propriété n'est plus vérifiée et la matrice K(T,f) ne présente pas de cohérence particulière : les éléments $k_{ij}^{M}$ sont indépendants les uns des autres.

La présente invention permet de tirer profit de cette propriété pour isoler les contributions de diffusion simple et multiple par filtrage à partir des signaux mesurés expérimentalement, en exploitant la symétrie particulière de la contribution de diffusion simple au sein de chaque matrice K(T,f). On peut ainsi extraire par filtrage :

- la composante de diffusion simple k$^S$$_{ij}$(T,f) de chaque coefficient k$_{ij}$(T,f) de la matrice K(T,f), telle que les composantes de diffusion simple k$^S$$_{ij}$(T,f) soient cohérentes entre elles sur chaque antidiagonale de ladite matrice K(T,f),
- et la composante de diffusion multiple k$^M$$_{ij}$(T,f) de chaque coefficient k$_{ij}$(T,f) de la matrice K(T,f), telles que les composantes k$^M$$_{ij}$(T,f) soient aléatoires et non corrélées entre elles.

Deux exemples de techniques de filtrage, pouvant être utilisées pour séparer les deux contributions, sont présentés ci-après.

Dans ces deux techniques, l'étape de traitement (c) comporte les deux sous-étapes suivantes, à la suite de la sous-étape (c1) de détermination de matrice de transfert fenêtrée :

- **une sous-étape (c2) de rotation de données**, par rotation des données de chaque matrice K(T,f) et création de deux sous-matrices $\mathbf{A_1}$(T,f) et $\mathbf{A_2}$(T,f),
- **la sous-étape (c3) susmentionnée de filtrage**, au cours de laquelle on filtre les matrices $\mathbf{A_1}$ et $\mathbf{A_2}$, notamment par projection (**technique 1**) ou par décomposition en valeurs singulières (**technique 2**), et on obtient alors deux matrices filtrées, notées $\mathbf{A_1^F}$ et $\mathbf{A_2^F}$,

- **une sous-étape de rotation de données inverse (c4)**, permettant de reconstituer, à partir de $\mathbf{A_1^F}$ et $\mathbf{A_2^F}$, de matrices de transfert filtrées $K^F$(T,f), contenant soit la contribution de diffusion simple soit la contribution de diffusion multiple, selon le type de filtrage employé.

Ces sous-étapes (c2) à (c4) sont détaillées ci-après.

**Sous-étape (c2) : Rotation des données**

Au cours de cette sous-étape (c2), l'unité centrale 5 calcule deux matrices $A1(T,f)=[a1_{uv}(T,f)]$ et $A2=[a2_{uv}(T,f)]$ à partir de chaque matrice K(T,f), où :

$$\mathtt{a1_{uv}(T,f)=k_{u+v-1,\ v-u+2M-1}(T,f),}$$

$$\mathtt{a2_{uv}(T,f)=k_{u+v,\ v-u+2M-1}(T,f),}$$

$$\mathtt{M=(N+3)/4.}$$

N est choisi de façon que M soit un entier : par exemple, N=125, et M=32. Si le nombre total de transducteurs 3 est tel que M n'est pas un entier, on travaille sur un nombre réduit N de transducteurs, tel que M=(N+3)/4 soit entier (dans l'exemple particulier considéré ici, on peut par exemple utiliser une barrette de 128 transducteurs et travailler sur uniquement N=125 d'entre eux).

Les matrices A1 et A2 sont des matrices carrées constituées de sous-ensembles de la matrice K(T,f) qui sont pivotés de 45˚ dans le sens antihoraire. Ces matrices A1 et A2 sont schématisées respectivement sur les figures 4 et 5, qui doivent être comprises comme suit :

- A1 est une matrice carrée de taille (*2M-1*) $\times$ (*2M-1*) dont les lignes sont constituées par certaines diagonales de la matrice K(T,f) (une sur deux), comprenant les coefficients de la matrice K(T,f) qui sont entourés sur la figure 4 (les coefficients de K(T,f) sont schématisés par des points sur les figures 4 et 5),
- A2 est une matrice carrée de taille (*2M-2*) $\times$ (*2M-2*) dont les lignes sont constituées par les autres diagonales de la matrice K(T,f), comprenant les coefficients de la matrice K(T,f) qui sont entourés sur la figure 5.

Dans ce qui suit, on appellera Ar=[ar_{ij}] les matrices A1 et A2 (r=1 ou 2) et on appellera L la dimension de la matrice Ar (pour la matrice A1, on a donc **L=2*M*-1** et pour la matrice A2, **L=2*M*-2**).

Du fait de la réciprocité spatiale, la matrice K est symétrique par rapport à sa diagonale principale D ($k_{ij} = k_{ji}$). La matrice Ar présente donc elle aussi une symétrie : chaque ligne de sa partie supérieure est identique à une ligne de la partie inférieure, symétrique par rapport à une médiane horizontale correspondant à la diagonale principale D. La partie supérieure de la matrice Ar peut donc être déduite directement de la partie inférieure. Ainsi, chaque colonne de la matrice A1 ne comporte que *M* coefficients indépendants bien qu'elle soit de taille *L>M*, et chaque colonne de la matrice A2 comporte *M*-1 coefficients indépendants. Plus généralement, le nombre de coefficients indépendants de la matrice Ar est donc un nombre Mr tel que Mr=M si r=1 et Mr=M-1 si r=2.

**Sous-étape (c3) : Filtrage**

Au cours de la sous-étape de filtrage (c3), l'unité centrale 5 sépare la composante de diffusion multiple de la composante de diffusion simple dans chacune des matrices Ar, r étant un indice égal à 1 ou 2, et on obtient ainsi au moins deux matrices filtrées Ar$^F$ correspondant respectivement aux deux matrices Ar et représentatives chacune, soit de la composante de diffusion simple, soit de la composante de diffusion multiple.

Ce filtrage peut être réalisé notamment selon la technique 1 susmentionnée ou selon la technique 2 susmentionnée.

**1. Technique 1 : Filtrage par projection**

Dans cette première technique, au cours de la sous-étape de filtrage (c3), l'unité centrale 5 calcule deux matrices filtrées Ar$^F$ qui sont **représentatives de la diffusion simple.**

Chacune de ces matrices filtrées est calculée par la formule :

**Ar$^F$=S$^t$S\*Ar**, où :

- S=[S$_u$] est un vecteur colonne, $^t$S\* étant la transposée du vecteur conjugué du vecteur S,

- les composantes S$_u$ du vecteur S sont des nombres complexes égaux à :

$$s_u = s.\exp\left\{ j\frac{k}{2R} y_u^2 \right\} \Big/ \sqrt{L} \; ,$$

- s est une constante, en pratique égale à 1 (et donc non mentionnée dans la suite),

- $y_u = \left(x_i - x_j\right)\Big/\sqrt{2}$ , avec u=(i-j) /2+M si r=1 et u=(i-j-1)/2+M si r=2,

- $x_i$ et $x_j$ sont les abscisses des transducteurs d'indices i et j selon un axe X, l'ensemble de transducteurs s'étendant au moins selon ledit axe X,
- L=2M-1 pour r=1 et L=2M-2 pour r=2.

Cette formule de calcul se justifie comme suit.

Chaque matrice Ar est la somme de deux termes, Ar$^S$ et Ar$^M$, désignant respectivement les contributions dues à la diffusion simple et à la diffusion multiple :

$$\text{Ar} = \text{Ar}^S + \text{Ar}^M \qquad (6)$$

La rotation des données, i.e. le passage de K(T,f) à Ar, se traduit mathématiquement par le changement de coordonnées $(x_i,x_j) \rightarrow (y_u,y_v)$ :

$$y_u = \left(x_i - x_j\right)\Big/\sqrt{2} \;\; \text{et} \;\; y_v = \left(x_i + x_j\right)\Big/\sqrt{2}$$

L'équation (5) se réécrit alors dans cette nouvelle base :

$$ar_{uv}^S(T,f) = \underbrace{\frac{\exp(2jkR)}{R}\exp\left\{ j\frac{k}{2R} y_u^2 \right\}}_{\substack{\text{contribution} \\ \text{déterministe}}} \times \underbrace{\Gamma_v}_{\substack{\text{contribution} \\ \text{aléatoire}}} \qquad (7)$$

$$\text{où } \Gamma_v = \sum_{d=1}^{N_d} A_d \exp\left\{ j\frac{k}{2R}\left[ \left( y_v - \sqrt{2}X_d \right)^2 \right] \right\}.$$

Ainsi pour un milieu 1 donné, chaque colonne de la matrice Ar$^S$ présente une dépendance suivant l'indice des lignes (u) parfaitement déterminée.

En revanche, la contribution de diffusion multiple (Equation 4) ne peut se factoriser aussi simplement. Même après rotation de la matrice, le caractère aléatoire de la position des diffuseurs persiste sur les colonnes comme sur les lignes de la matrice Ar$^M$.

Le filtrage des signaux simplement diffusés peut donc être réalisé en projetant les colonnes de la matrice totale Ar sur l'espace «caractéristique de la diffusion simple», engendré par le vecteur **s** de coordonnées :

$$s_u = \exp\left\{ j\frac{k}{2R} y_u^2 \right\} \bigg/ \sqrt{L} \qquad (8).$$

La présence au dénominateur de $\sqrt{L}$ assure la normalisation du vecteur **S**. Le vecteur ligne P, résultat de cette projection s'écrit :

$$\mathbf{P} = {}^t\mathbf{S}^*\mathbf{A}r \qquad (9),$$

où $^t$S* est la transposée du vecteur conjugué de **s**.

Les coordonnées du vecteur P sont données par :

$$p_v = \sum_u s_u^* a_{uv} = \sum_u s_u^* a_{uv}^S + \sum_u s_u^* a_{uv}^M = \sqrt{L}\frac{\exp(2jkR)}{R}\Gamma_v + \sum_u s_u^* a_{uv}^M \qquad (10)$$

Le terme résiduel $\sum_u s_u^* a_{uv}^M$ correspond à la projection des signaux multiplement diffusés sur le vecteur **S**.

Ensuite, la matrice filtrée Ar$^F$ est obtenue en multipliant le vecteur colonne **S** par le vecteur ligne P :

$$\mathbf{A}r^{\mathbf{F}} = \mathbf{SP} = \mathbf{S}.{}^t\mathbf{S}^*.\mathbf{A} \qquad (11)$$

Les coordonnées de la matrice Ar$^F$ s'écrivent alors :

$$ar_{uv}^F = s_u p_v = \frac{\exp(2jkR)}{R}\exp\left\{ j\frac{k}{2R} y_v^2 \right\}\Gamma_v + s_u \sum_{u'} s_{u'}^* a_{u'v}^M \qquad (12)$$

Le premier terme est strictement égal à la composante simplement diffusée (Equation 7). On a donc :

$$a_{uv}^F = a_{uv}^S + s_u \sum_{u'} s_{u'}^* a_{u'v}^M \qquad (13)$$

En termes de matrices, l'équation (13) se réécrit de la manière suivante:

$$\mathbf{Ar^F} = \underbrace{\mathbf{Ar^S}}_{\substack{\textit{diffusion} \\ \textit{simple}}} + \underbrace{\mathbf{S.^t S^*.A^M}}_{\textit{bruit résiduel}} \qquad (14)$$

La matrice Ar$^F$ contient bien la contribution liée à la diffusion simple (A$^s$). Mais elle contient également un terme résiduel lié à la présence de diffusion multiple (S$^t$S*A$^M$). La persistance de ce terme est due au fait que les signaux de diffusion multiple ne sont pas strictement orthogonaux à l'espace caractéristique de la diffusion simple, engendré par le vecteur S.

Le filtrage réalisé n'est donc pas parfait, cependant, on peut évaluer l'importance du bruit résiduel.

En effet, comme on l'a vu au paragraphe concernant la rotation des données, chaque colonne de la matrice A1 ne dispose que de M coefficients indépendants et la matrice A2 de M-1 coefficients indépendants ; la contribution de diffusion multiple est donc diminuée d'un facteur $\sqrt{Mr}$ suite au filtrage. La contribution de diffusion simple restant inchangée, le gain en rapport «signal/bruit», ou plus exactement «diffusion simple/diffusion multiple» est donc de l'ordre de $\sqrt{Mr}$.

La technique de filtrage décrite ci-dessus (technique 1) est à utiliser notamment quand on souhaite extraire une contribution de diffusion simple noyée dans de la diffusion multiple, c'est-à-dire dans le cas de milieux pour lesquels les signaux simplement diffusés sont d'amplitude très faible par rapport aux signaux issus de diffusion multiple. Cela s'applique notamment au cas de la détection de cibles enfouies dans un milieu diffusant.

**2. Technique 2 : Filtrage par décomposition en valeurs singulières**

Cette seconde technique consiste à séparer diffusion simple et multiple en effectuant la décomposition en valeurs singulières ou SVD («Singular Value Decomposition») des matrices A$_1$ et A$_2$ obtenues après rotation. La SVD a en effet la propriété de décomposer une matrice en deux sous-espaces : un espace dit «signal» (matrice caractérisée par une importante corrélation entre lignes et/ou colonnes de la matrice) et un espace dit «bruit» (matrice d'aspect aléatoire, sans corrélation entre éléments). En appliquant la SVD aux matrices Ar obtenues après rotation, l'espace signal correspond à la matrice Ar$^S$ (contribution de diffusion simple, caractérisée par une grande corrélation suivant ses colonnes) et l'espace bruit est associé à la matrice Ar$^M$ (contribution de diffusion multiple), avec Ar= Ar$^S$+ Ar$^M$ (Equation 6 déjà citée au paragraphe concernant la technique 1).

La SVD des matrices Ar s'écrit de la manière suivante :

$$\mathbf{Ar} = \mathbf{U\Lambda^t V^*} = \sum_{i=1}^{L} \lambda_i \mathbf{U_i^t V_i^*} \qquad (15)$$

U et V sont des matrices carrées unitaires de dimension $L$. Leurs colonnes respectives U$_i$ et V$_i$ correspondent aux vecteurs propres associées à la valeur singulière $\lambda_{i,r}$. A est une matrice carrée diagonale de dimension $L$ dont les éléments diagonaux correspondent aux valeurs singulières $\lambda_{i,r}$ rangées dans l'ordre décroissant. Dans le paragraphe concernant la rotation de données, une symétrie particulière de la matrice Ar a été mise en évidence : cette matrice ne comprend que $Mr$ lignes indépendantes, elle est donc de rang $Mr<L$. Donc la matrice Ar ne présente que $Mr$ valeurs singulières non nulles et l'équation (15) se réécrit :

$$\mathbf{Ar} = \mathbf{U\Lambda^t V^*} = \sum_{i=1}^{Mr} \lambda_i \mathbf{U_i^t V_i^*} \qquad (16)$$

La diffusion simple se caractérisant, après rotation des données, par une grande cohérence le long des colonnes des matrices Ar, la SVD fait ressortir cette contribution dans l'espace signal (la contribution diffusion simple sera associée aux valeurs singulières les plus élevées) alors que la contribution de diffusion multiple sera associée aux valeurs singulières plus faibles. Ici, contrairement à la première technique de filtrage, on ne fait donc pas d'hypothèse *a priori* sur la forme de la cohérence existant sur les antidiagonales de la matrice K(T,f) dans le cas de la diffusion simple, on suppose simplement que cette cohérence existe.

Le problème est de déterminer à quel rang de valeur singulière correspond le seuil séparant l'espace «signal» (associé à la diffusion simple) de l'espace «bruit» (associé à la diffusion multiple). Si l'équation (5) était rigoureusement exacte, seule la première des valeurs singulières correspondrait à l'espace signal. Lorsque les hypothèses aboutissant à l'équation (5) ne sont pas rigoureusement exactes, la contribution de diffusion simple n'est pas de rang 1 et plusieurs valeurs singulières portent la trace de cette contribution. Il faut alors établir un critère de séparation entre les contributions de diffusion simple (espace signal) et de diffusion multiple (espace bruit).

Pour ce faire, on utilise les résultats de la théorie des matrices aléatoires. Par convention et souci de simplification, les valeurs singulières $\lambda_{i,r}$ sont normalisées par leur moyenne quadratique :

$$\tilde{\lambda}_{i,r} = \frac{\lambda_{i,r}}{\sqrt{\dfrac{1}{Mr+1-i}\displaystyle\sum_{m=i}^{Mr}\lambda_{m,r}^{2}}} \qquad (17)$$

Pour une matrice de grande dimension dont les coefficients sont totalement aléatoires, sans corrélation entre eux, la première valeur singulière $\lambda_{l}$ ne dépasse jamais une valeur $\lambda_{max}$ ($\tilde{\lambda}_{max}=2$, dans le cas d'une matrice carrée).

Expérimentalement, la contribution de diffusion multiple ne correspond pas tout à fait à une matrice totalement aléatoire, car il existe des corrélations résiduelles entre capteurs (notamment à cause du couplage mécanique ou électrique entre transducteurs voisins de l'ensemble 3), ce qui modifie $\tilde{\lambda}_{max}$. On peut établir à partir de [A.M. Sengupta and P.P. Mitra, "Distributions of singular values for some random matrices," Phys. Rev. E, Vol.60(3), pp 3389-3392, 1999.], la nouvelle loi de probabilité pour les valeurs singulières d'une telle matrice et en déduire la valeur de $\tilde{\lambda}_{max}$ qui va permettre de définir un critère de séparation objectif entre l'espace signal et l'espace bruit.

Après rotation des données expérimentales, la matrice Ar à traiter (cf équation 6) est donc la somme d'une matrice Ar$^S$ de rang $p<M$ associée à la diffusion simple et d'une matrice Ar$^M$ de rang $M$ associée à la diffusion multiple que l'on désire filtrer.

La technique proposée est la suivante : après avoir effectué la SVD, l'unité centrale 5 considère la première valeur singulière $\tilde{\lambda}_{l,r}$ après normalisation. Si celle-ci est supérieure à $\tilde{\lambda}_{max}$, cela signifie que le premier espace propre est associé à de la diffusion simple.

On itère ensuite le processus au rang 2 et aux rangs supérieurs si nécessaire.

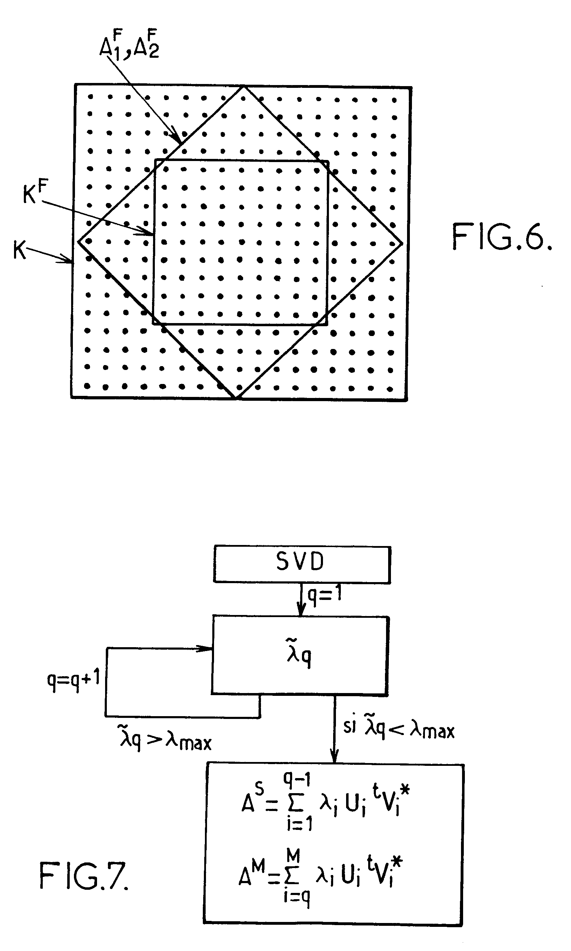

Comme représenté sur la figure 7, le traitement effectué par l'unité centrale 5 est donc un traitement itératif qui comprend les sous-étapes suivantes :

(c31) on fixe initialement q=1,

(c32) on calcule une valeur singulière normalisée à partir de $\lambda_{q,r}$ :

$$\tilde{\lambda}_{q,r} = \frac{\lambda_{q,r}}{\sqrt{\dfrac{1}{Mr+1-q}\displaystyle\sum_{m=q}^{Mr}\lambda_{m,r}^{2}}} \ ,$$

(c33) si $\tilde{\lambda}_{q,r}$ est au moins égal à une valeur seuil prédéterminée $\tilde{\lambda}_{max}$, on attribue $\lambda_{q,r}$ à la diffusion simple et on réitère la sous-étape (c32) en incrémentant q d'une unité,

(c34) si $\tilde{\lambda}_{q,r}$ est inférieur à la valeur seuil $\tilde{\lambda}_{max}$, on attribue $\tilde{\lambda}_{q,r}$ et les éventuelles valeurs singulières suivantes à la diffusion multiple.

Si on appelle p+1 le rang pour lequel $\lambda_{p+1,r}<\lambda_{max}$, on obtient ainsi :

$$\mathbf{Ar}^{\mathbf{S}} = \sum_{i=1}^{p}\lambda_{i,r}\mathbf{U_i}\,^{\mathbf{t}}\mathbf{V_i}^{*} \qquad (19)$$

$$\mathbf{Ar^M} = \sum_{i=p+1}^{Mr} \lambda_{i,r} \mathbf{U_i}^{\mathbf{t}} \mathbf{V_i^*} \quad (20)$$

La matrice $Ar^S$ contient alors la contribution de diffusion simple (plus une contribution de diffusion multiple résiduelle) et la matrice $Ar^M$ est associée à la diffusion multiple.

On notera que la technique 2 suppose que la première des valeurs singulières normalisée dépasse le seuil $\lambda_{max}$. Elle ne peut pas être utilisée dans les milieux hautement diffusants, c'est-à-dire des milieux pour lesquels la contribution de diffusion multiple est prépondérante par rapport à la diffusion simple. Dans ce cas, on utilisera plutôt la technique de filtrage par projection des antidiagonales sur l'espace de diffusion simple (technique 1) pour extraire la contribution de diffusion simple. Si au contraire la contribution de diffusion simple est prépondérante ou du même ordre de grandeur que la diffusion multiple, on pourra utiliser la technique de filtrage par SVD des matrices A (technique 2) et ainsi extraire la contribution de diffusion multiple.

**Sous-étape (c3) : rotation de données inverse**

Au cours de la sous-étape de rotation de données inverse (c4), l'unité centrale 5 effectue une transformation inverse de la transformation décrite à la sous-étape (c1), et calcule ainsi une matrice de transfert fenêtrée filtrée $K^F(T, f)=[k^F_{ij}(T,f)]$, où :

- lorsque i-j est pair : $k^F_{ij}(T,f)=a1^F_{(i-j)/2+M, \ (i+j)/2}$,
- lorsque i-j est impair : $k^F_{ij}(T,f)=a2^F_{(i-j-1)/2+M, \ (i+j-1)/2}$.

La matrice $K^F(T,f)$ est une matrice carrée de taille $(2M-1) \times (2M-1)$, contenant des signaux qui sont issus soit de la diffusion simple, soit de la diffusion multiple, selon le type de filtrage appliqué. La procédure de rotation inverse des données est schématisée sur la figure 6, qui montre que la matrice $K^F(T,f)$ reprend une partie des coefficients des antidiagonales des matrices A1(T,f) et A2(T,f).

Les matrices filtrées $K^F(T,f)$ peut ensuite être utilisée de diverses façons :

- si $K^F(T,f)$ correspond à la composante de diffusion simple, elle peut être utilisée notamment pour détecter un point singulier du milieu 1 ou pour bâtir une image du milieu 1. A cet effet, deux méthodes d'imagerie peuvent par exemple être utilisées :

    ➢ Selon une première méthode d'imagerie, l'unité centrale 5 peut par exemple calculer à partir chaque matrice $K^F(T,f)$, par transformée de Fourier inverse, une matrice temporelle fenêtrée filtrée de réponse inter-éléments $H^F(T,t)$ puis sommer les différentes matrices temporelles $H^F(T,t)$ pour obtenir une matrice temporelle filtrée de réponse inter-éléments $H^F(t)$, représentative des réponses entre transducteurs de l'ensemble de transducteurs. L'unité centrale réalise alors l'image du milieu par formation de voies à partir de ladite matrice temporelle filtrée de réponse inter-éléments $H^F(t)$.
    ➢ Selon une deuxième méthode d'imagerie, dite méthode de décomposition de l'opérateur de retournement temporel («méthode DORT», définie notamment par Prada et al., «Eigenmodes of the time reversal operator : a solution to selective focusing in multiple-target media», Wave Motion 20 (1994) 151-163, Elsevier Science B.V.*)*, l'unité centrale 5 peut procéder aux étapes suivantes :

        (d1) déterminer pour chaque matrice de transfert filtrée $K^F(T,f)$ un opérateur de retournement temporel $ORT(T,f) = K^{F*}(T,f) \ K^F(T,f)$, correspondant à la ou chaque matrice de transfert $K^F(T,f)$, $K^{F*}(T,f)$ étant la matrice conjuguée complexe de $K^F(T,f)$,
        (d2) déterminer au moins des vecteurs propres et/ou des valeurs propres dudit opérateur de retournement temporel,
        (d3) détecter au moins une singularité dans le milieu en fonction au moins desdits vecteurs propres et/ou desdites valeurs propres. Au cours de cette étape (d3), on peut notamment déterminer des vecteurs propres $Vi(f)$ de l'opérateur de retournement temporel, puis propager numériquement ces vecteurs propres dans un modèle numérique du milieu 1, pour déterminer une position d'un objet réverbérant dans le milieu 1 correspondant à chaque vecteur propre,

- si les matrices $K^F(T,f)$ correspondent à la composante de diffusion multiple, elles peuvent être utilisées notamment pour calculer à partir de ladite composante de diffusion multiple, un indice représentatif de l'importance de la diffusion multiple dans le milieu. Dans ce cas, on peut par exemple réaliser une image (échographique ou autre) du milieu par tout moyen connu ou par les méthodes susmentionnées, et on quantifie la fiabilité de ladite image en fonction dudit indice représentatif de l'importance de la diffusion multiple. Avantageusement, on peut calculer cet indice en plusieurs points (notamment à diverses profondeurs R) et on quantifie la fiabilité de plusieurs parties de l'image correspondant auxdits plusieurs points, en fonction dudit indice représentatif de l'importance de la diffusion multiple.

Plusieurs exemples d'application possibles du procédé selon l'invention vont maintenant être décrits en détail.

**Application 1 : détection d'une cible dans un milieu diffusant**

L'application présentée ici consiste à détecter une cible (un gros réflecteur) enfouie dans un milieu diffusant (milieu très concentré en petits diffuseurs) en isolant la contribution de diffusion simple issue de la cible via la technique de filtrage par projection (technique de filtrage 1 susmentionnée).

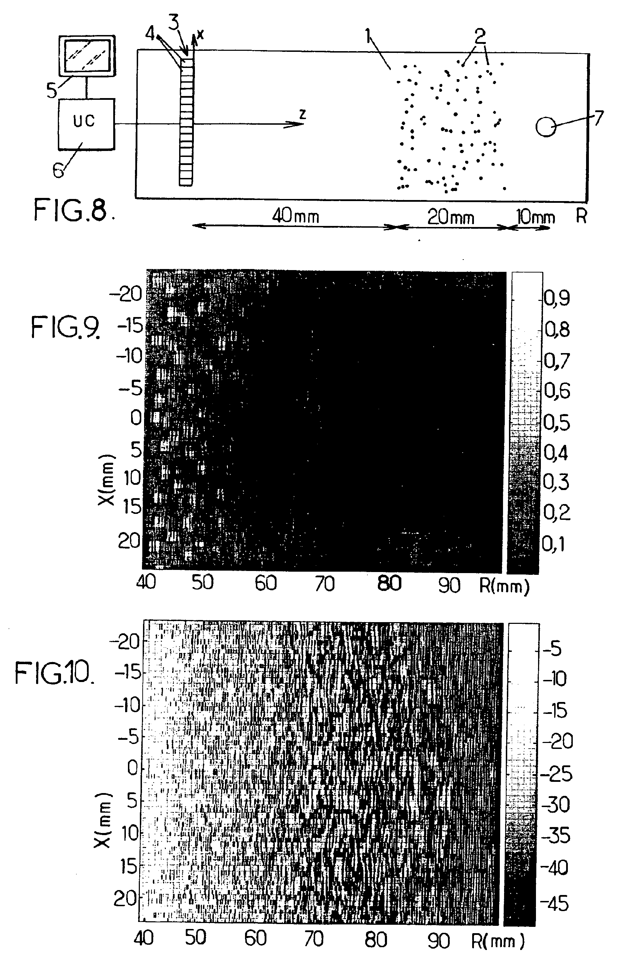

Le dispositif expérimental est représenté sur la figure 8. L'ensemble 3 de transducteurs tel que décrit ci-dessus en regard de la figure 1, est placé dans un bain d'eau 1 formant le milieu 1. Le milieu 1 contient un grand nombre de diffuseurs 2 disposés par exemple à une distance R d'environ 40 mm de l'ensemble de transducteurs 3 et sur une profondeur de champ d'environ 20 mm. Cette distance R et cette profondeur de champ sont mesurées selon l'axe Z. Les diffuseurs peuvent par exemple être constitués par un ensemble de tiges d'acier de 0.8mm de diamètre réparties aléatoirement avec une concentration d'environ 12 tiges/cm$^2$. Le libre parcours moyen le typique pour ce milieu 1 est de 7 mm, de sorte que ce milieu est fortement diffusant. La cible 7 est disposée par exemple environ 10 mm derrière l'ensemble des diffuseurs 2. Cette cible 7 peut par exemple être une tige d'acier d'un diamètre de 10 mm.

La matrice temporelle de réponse inter-éléments H(t) est déterminée comme suit : on fait émettre par les transducteurs un signal balayant linéairement une bande de fréquence de 2 à 4 MHz («chirp»). Les signaux réverbérés par le milieu 1 sont alors enregistrés par les transducteurs 3 et sont ensuite convolués par le signal d'émission afin d'obtenir la réponse impulsionnelle entre chaque paire de transducteurs. L'ensemble de transducteurs peut se présenter sou la forme d'une barrette échographique de 128 voies avec un pas entre inter-éléments de 0.417mm. La matrice H(t) est donc de taille 128×128.

Celle-ci est ensuite découpée temporellement selon l'équation (1) avec des fenêtres temporelles de longueur $\Delta t$=5.5$\mu s$. Chaque fenêtre se recouvre de moitié avec ses voisines. Une série de matrice K($T,t$) est obtenue et le passage dans le domaine fréquentiel est ensuite réalisé par une transformée de Fourier discrète, ce qui aboutit à l'obtention d'une série de matrices K($T,f$). Dans la suite de l'étude, seule la bande de fréquence [2.5 - 3.5] MHz sera considérée.

Les figures 9 et 10 montrent les images du milieu 1 obtenues à partir de la matrice H(t) (avec une échelle linéaire pour l'amplitude du signal sur la figure 9 et avec une échelle logarithmique sur la figure 10) par les méthodes classiques d'échographie, par formation de voies focalisée à l'émission et à la réception. Il est impossible de distinguer détecter la cible, située ici à $R=70mm$. On détecte clairement les premiers diffuseurs du milieu désordonné (sur environ 1cm d'épaisseur, soit une épaisseur comparable au libre parcours moyen) mais ensuite, les signaux multiplement diffusés prennent le dessus et une image de tavelures (speckle) est alors obtenue, sans correspondance physique avec la présence de cibles.

Par ailleurs, on a également essayé de traiter les signaux obtenus par la méthode DORT susmentionnée, sans le filtrage selon l'invention. Celle-ci consiste en une décomposition en valeurs singulières de chaque matrice K(T,f) :

$$\mathbf{K} = \mathbf{U}\mathbf{\Lambda}^t\mathbf{V}^* \quad (21),$$

avec les notations déjà définies ci-dessus.

Il est connu qu'en l'absence de bruit et pour des cibles ponctuelles en régime de diffusion simple, chaque valeur singulière non nulle est associée à une cible du milieu. A chaque fréquence, la valeur singulière $\lambda_i$ est proportionnelle à la réflectivité de la i$^{ème}$ cible et le vecteur propre $V_i$ décrit le signal qui permet de refocaliser une onde sur le diffuseur en question. La méthode DORT permet donc de distinguer différentes cibles et de focaliser l'onde sélectivement sur chaque cible. De plus, si une cible est détectable dans une bande de fréquence et pas dans une autre, on peut sélectionner la bande de fréquence dans laquelle on détecte la cible afin de construire son image, alors qu'avec l'échographie traditionnelle, toute la bande de fréquence du signal incident est utilisée pour reconstruire l'image du milieu ce qui dégrade la qualité de l'image finale.

La méthode DORT a été testée ici sur la série de matrices K(T,f) : une décomposition en valeurs singulières (SVD) est effectuée à chaque temps d'écho $T$ et à chaque fréquence $f$. Pour chaque matrice K(T,f), la première valeur singulière est normalisée par la moyenne quadratique des valeurs singulières :

$$\tilde{\lambda}_1 = \frac{\lambda_1}{\sqrt{\langle \lambda_i^2 \rangle}} \quad (22)$$

où $\tilde{\lambda}_1$ représente la 1$^{ère}$ valeur singulière normalisée.

Cette normalisation a pour but de définir un critère de détection de cible : si $\tilde{\lambda} < \tilde{\lambda}_{seuil}$ alors aucune cible n'est détectée, dans le cas contraire cela indique la présence d'une cible à la profondeur R correspondant au temps d'écho $T$ et à la fréquence $f$. La valeur seuil $\tilde{\lambda}_{seuil}$ est déterminée à partir de la théorie des matrices aléatoires. En terme de rapport «diffusion simple sur diffusion multiple», cette valeur seuil indique que la cible sera détectée si et seulement si :

$$\left[ \frac{\sigma_S}{\sigma_M} \right]_{DORT} > \frac{\tilde{\lambda}_{seuil}}{\sqrt{N}} \quad (23)$$

où N est le nombre de transducteurs, $\sigma_S$ représente l'amplitude du signal simplement diffusé issu de la cible et $\sigma_M$ l'amplitude des signaux multiplement diffusés. Dans le cas présent, la méthode DORT utilisée sans le filtrage selon l'invention n'a pas permis la détection de la cible 7 dans la configuration expérimentale étudiée : à aucun temps d'écho $T$ et aucune fréquence $f$, la première valeur singulière normalisée $\tilde{\lambda}_1$ n'a dépassé la valeur seuil $\tilde{\lambda}_{seuil}$. Par ailleurs, la méthode DORT a été couplée à un filtrage préalable de la diffusion simple par projection des antidiagonales (méthode 1 explicitée ci-dessus). A cet effet, on a appliqué la méthode DORT, comme cela est décrit précédemment, mais sur la série de matrices filtrées $K^F(T,f)$ obtenues par la méthode de filtrage 1 et contenant essentiellement la contribution de diffusion simple. Pour chacune de ces matrices, la première valeur singulière est normalisée selon l'équation (22). La théorie des matrices aléatoires nous permet comme précédemment d'établir un critère de détection de cible de type $\tilde{\lambda}_1 > \tilde{\lambda}_{seuil}$, avec une probabilité de fausse alarme donnée, et dépendant de la valeur $\tilde{\lambda}_{seuil}$ : si $\tilde{\lambda}_1 < \tilde{\lambda}_{seuil}$ aucune cible n'est détectée, dans le cas contraire cela indique la présence d'une cible à la profondeur R correspondant au temps d'écho T. Grâce à l'extraction préalable de la diffusion simple, le seuil de détection pour la méthode DORT est nettement amélioré (*i.e* diminué), puisque l'amplitude de la contribution de diffusion multiple a été divisée d'un $\sqrt{Mr}$ facteur (cf paragraphe III.2). Le seuil de détection de le présente invention est donc divisé d'un facteur $\sqrt{Mr}$ par rapport à ce qui est obtenu avec la méthode DORT (Equation 23) seule.

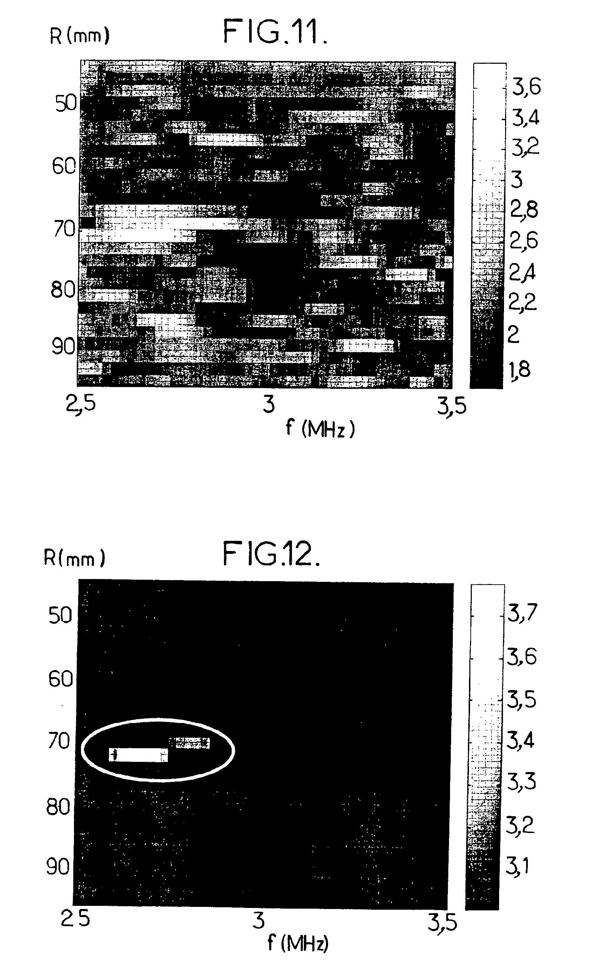

Dans la configuration expérimentale étudiée, nous avons retenu ici la valeur seuil $\tilde{\lambda}_{seuil}=3$, qui correspond à une probabilité de fausse alarme inférieure à 0.1%. Sur les figures 11 et 12 est présentée l'évolution de $\tilde{\lambda}_1$ avec la distance R (correspondant au temps d'écho $T$ tel que $R=cT/2$) et la fréquence f, sans seuillage pour la figure 11 et avec seuillage à la valeur seuil $\tilde{\lambda}_{seuil}=3$ pour la figure 12.

Contrairement à ce qui a été obtenu dans les mêmes conditions avec la méthode DORT seule (aucune cible n'avait pu être détectée), le filtrage de la diffusion simple permet la détection de la cible puisque la première valeur singulière $\tilde{\lambda}_1$ dépasse la valeur seuil $\tilde{\lambda}_{seuil}$ sur une certaine plage de fréquence au temps d'écho de la cible.

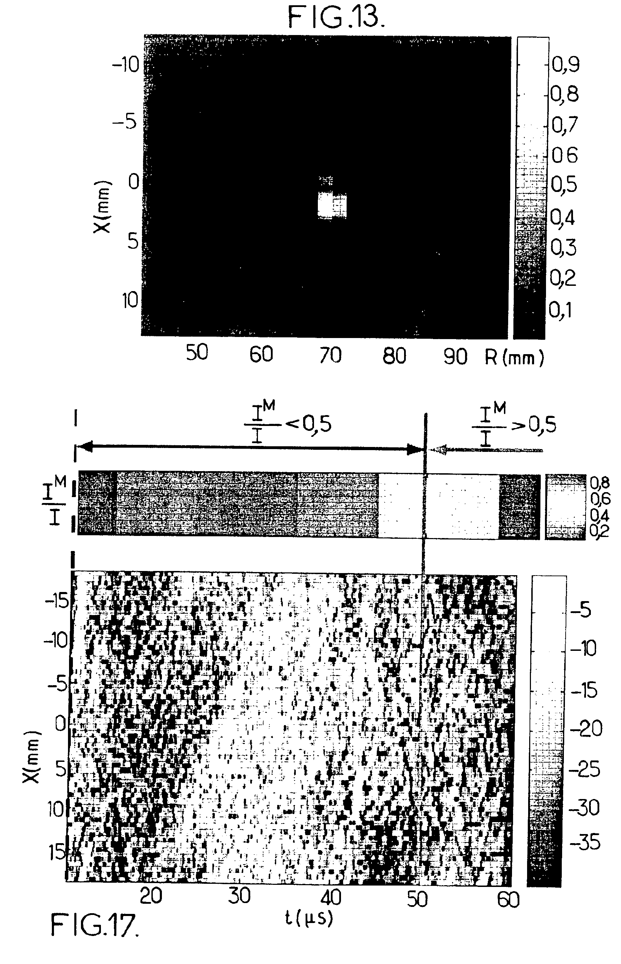

Une fois le critère de détection appliqué, l'image de la cible peut être obtenue (figure 13) en repropageant numériquement les vecteur propres $V_i$ à des profondeurs $R(=cT/2)$ et des fréquences $f$ pour lesquelles la première valeur singulière satisfait le critère de détection. On obtient ainsi une image de la cible, qui permet de la localiser, ce que ni l'échographie ni la méthode DORT seule n'ont pu faire.

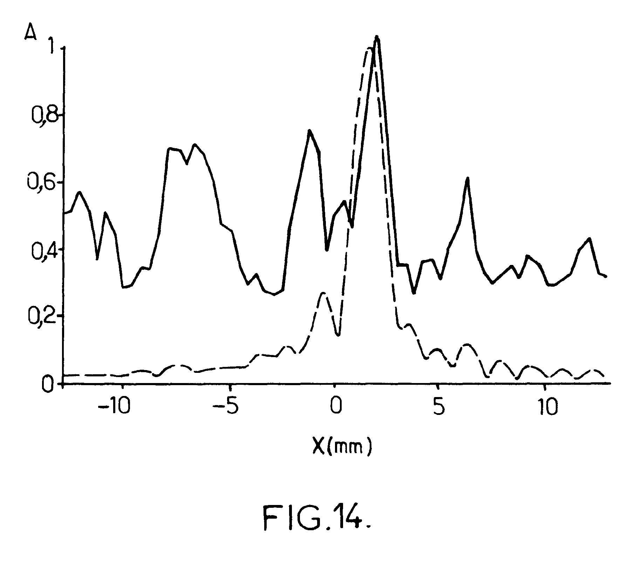

Sur la figure 14, on a comparé l'amplitude normalisée du signal de l'image dans le plan de la cible 7 :

- dans le cas de l'image de la figure 13 (courbe en pointillés), ce qui correspond au filtrage de la contribution de diffusion simple couplé à la méthode DORT),
- et dans le cas de l'image de la figure 9 (courbe en trait plein), ce qui correspond à l'échographie classique.

On peut constater que le signal obtenu en mettant en oeuvre la présente invention (courbe en pointillés) est nettement meilleur et permet de discriminer aisément la cible 7, contrairement au signal obtenu par échographie classique. On peut montrer en effet que l'amélioration du rapport signal sur bruit sur l'image finale croît en N pour l'échographie et en $N^{3/2}$ avec la technique de l'invention, N désignant le nombre de transducteurs du réseau 3. L'image échographique (trait plein) présente des lobes secondaires assez importants, dus à l'aberration induite par le milieu diffusant. A partir d'une telle image, on ne peut pas conclure avec certitude que le pic principal soit effectivement lié à la présence d'une cible : statistiquement, il peut s'agir d'une fausse alarme due aux fluctuations inhérentes à l'aspect aléatoire de la diffusion multiple. Pour atteindre une probabilité de fausse alarme inférieure à 0 .1%, on peut montrer qu'il faudrait ici que le pic principal ait une valeur 2,5 fois supérieure à la moyenne de l'amplitude de l'image échographique, ce qui n'est pas le cas. Enfin, le pic principal de l'image échographique ne se retrouve pas exactement à la bonne position ; au contraire, l'image obtenue avec l'invention ne semble pas souffrir d'aberration.

En conclusion, la technique développée ici qui allie le filtrage de la diffusion simple avec la méthode DORT améliore les capacités d'un réseau d'émetteurs-récepteurs à détecter et imager une cible cachée derrière un écran diffusant multiplement les ondes.

D'une part, l'analyse temps fréquence mise en jeu permet de sélectionner les bandes de fréquence favorables à la détection de la cible, sélection impossible avec l'échographie traditionnelle. Une analyse théorique fondée sur la théorie des matrices aléatoires permet de montrer que, dans des conditions identiques, la probabilité de fausses alarmes en milieu diffusant est rendue plus faible par notre technique.

D'autre part, cette technique réduit les effets d'aberration (apparition de lobes secondaires, déplacement du lobe principal...) dont souffrent les techniques d'imagerie conventionnelles.

**Application 2 : étude d'un milieu très faiblement diffusant**

Contrairement à l'application précédente, nous considérons ici le cas d'un milieu désordonné faiblement diffusant : la contribution de diffusion simple domine alors la diffusion multiple. Dans ce type de milieu, les techniques conventionnelles comme l'échographie fonctionnent bien et permettent de construire des images de réflectivité du milieu car la diffusion multiple étant minoritaire, celle-ci ne perturbe que très peu l'image échographique obtenue. Cependant, on cherche ici à avoir accès à d'autres informations intéressantes dans l'étude du milieu de propagation : notamment des paramètres caractérisant purement la partie multiplement diffusée de l'onde. Ces paramètres sont les différents «libres parcours moyen» au sein du milieu ; une fois la contribution de diffusion multiple isolée grâce à notre technique, on peut mesurer ces paramètres, ce que ne peuvent faire les techniques classiques d'imagerie échographique.

Lorsqu'une onde se propage au sein d'un milieu diffuseur aléatoire, elle perd progressivement, de façon exponentielle, sa cohérence : au bout d'une distance L, seule une fraction $\exp(-L/l_{ext})$ de l'énergie initiale continue de se propager en cohérence avec l'onde initiale. Le paramètre $l_{ext}$, libre parcours d'extinction globale, caractérise donc la distance d'extinction de la partie cohérente de l'onde. Cette extinction progressive de l'onde cohérente a deux origines distinctes : la diffusion (à chaque rencontre avec un diffuseur, une partie de la cohérence initiale est perdue), et l'absorption intrinsèque du milieu de propagation. A ces deux phénomènes sont rattachées deux autres longueurs caractéristiques : le libre parcours moyen élastique $l_e$, et le libre parcours moyen d'absorption $l_a$, de telle sorte que

$$\exp\left(-\frac{L}{\ell_{ext}}\right) = \underbrace{\exp\left(-\frac{L}{\ell_e}\right)}_{\substack{\text{effet des} \\ \text{pertes par} \\ \text{diffusion}}} \times \underbrace{\exp\left(-\frac{L}{\ell_a}\right)}_{\substack{\text{effet des} \\ \text{pertes par} \\ \text{absorption}}},$$

et donc

$$\frac{1}{\ell_{ext}} = \frac{1}{\ell_e} + \frac{1}{\ell_a}$$

Mesurer la longueur d'extinction globale $l_{ext}$ est intéressant, mais ne permet pas de distinguer les pertes par absorption ($l_a$) des pertes par diffusion ($l_e$). La technique de séparation diffusion simple/diffusion multiple selon l'invention, en sélectionnant dans la réponse du milieu la contribution de diffusion multiple, permet de mesurer de façon distincte $l_e$ et $l_a$ et ainsi de caractériser plus complètement le milieu sondé.

Pour illustrer la faisabilité et l'intérêt de telles mesures, la technique de séparation diffusion simple/diffusion multiple selon l'invention a été appliquée tout d'abord à un milieu synthétique (gel agar-agar faiblement diffusant). Le montage expérimental est similaire à celui de la figure 1, mais l'échantillon de milieu diffusant est placé dans un bain d'eau à une distance a=50 mm de l'ensemble 3 de transducteurs, cet échantillon ayant une épaisseur L=100 mm selon l'axe Z.

On extrait la contribution de diffusion multiple dans une série de matrices $K^F(T,f)$ obtenues par la technique 2 décrite ci-dessus.

Une fois la contribution de diffusion multiple isolée, on calcule l'intensité multidiffusée moyenne $I^M$ en fonction de l'écart émetteur-récepteur $X$ (distance entre le transducteur émetteur i et le transducteur récepteur j) et du temps d'écho $T$ :

$$I^M\left(X = x_j - x_i, T\right) = \left\langle \left| k_{ij}^M\left(T, f\right) \right|^2 \right\rangle_{\{f, (x_i, x_j)\}} \qquad (24)$$

Rappelons que $\left| k_{ij}^M\left(T, f\right) \right|^2$ désigne les coefficients (ième ligne, jème colonne) de la matrice $K^M(T,f)$. Les symboles <...> représentent une moyenne effectuée d'une part sur toute la bande de fréquence $f$ et d'autre part sur tous les couples source/récepteur (i,j) séparés de $X = x_j - x_i$.

Par ailleurs, un résultat supplémentaire est fourni par l'examen de l'évolution temporelle des intensités simplement et multiplement diffusées obtenues au point source (X=0), qu'on notera $I^S(0,T)$ et $I^M(0,T)$. En effet, la théorie du transfert radiatif [J. Paasschens, "Solution of the time-dependent Boltzmann equation, "Phys. Rev. E, Vol.56(1), pp 1135-1141, 1997] montre qu'il existe des solutions analytiques prédisant l'évolution temporelle de $I^S(0,T)$ et $I^M(0,T)$. En particulier, il apparaît que l'évolution temporelle de l'intensité simplement diffusée $I^S(0,T)$ ne dépend que du libre parcours d'extinction $l_{ext}$.

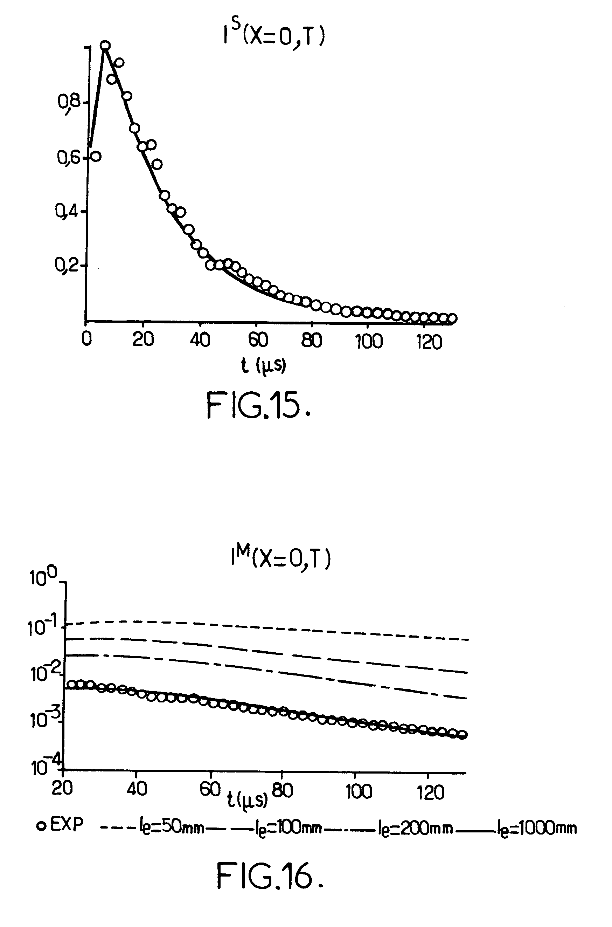

Dans le cas du gel agar-agar étudié ici, un ajustement entre la prévision théorique et le résultat de l'expérience (figure 15) aboutit à la valeur $l_{ext}$=50mm.

Pour le vérifier, on a mesuré l'intensité diffusée totale I(0, T) et l'intensité multiplement diffusée $I^M(0, T)$ comme expliqué ci-dessus, et on en a déduit l'intensité simplement diffusée $I^S(0,T)$ par différence. En variante, on peut mesurer $I^S(0,T)$ en appliquant la formule 24 non plus aux coefficients de la matrice $K^M(T,f)$ mais aux coefficients de la matrice $K^S(T,f)$ déterminée par exemple selon la méthode 2 décrite ci-dessus. La courbe mesurée de $I^S(0,T)$, représentée par des points sur la figure 15, a été normalisée par son maximum (fixé à 1). On a calculé par ailleurs l'évolution temporelle de $I^S(0,T)$ prédite par la solution exacte de l'équation de transfert radiatif, pour plusieurs parcours moyens d'extinction. Cette courbe, normalisée également en fixant sa valeur maximale à 1, s'ajuste sur la courbe expérimentale pour un libre parcours d'extinction $l_{ext}$=50mm (courbe en trait plein sur la figure 15), ce qui permet de déterminer que $l_{ext}$=50mm.

Si l'on considère à présent l'évolution temporelle de l'intensité multiplement diffusée $I^M(X=0,T)$, la théorie montre qu'elle dépend *distinctement* des libres parcours moyens $l_e$ et $l_a$. Ainsi, $l_e$ peut être déterminés par ajustement des mesures expérimentales de $I^M(X=0,T)$ avec la théorie (Figure 16), ce qui donne $l_e$ =1000mm. On obtient ce résultat en déterminant quelle est la valeur de $l_e$ pour laquelle la courbe théorique de $I^M(X=0,T)$ s'ajuste sur la courbe expérimentale (courbe EXP matérialisée par des points en forme de petits cercles sur la figure 16). On en déduit $l_a$ par la formule $\dfrac{1}{\ell_{ext}} = \dfrac{1}{\ell_e} + \dfrac{1}{\ell_a}$, ce qui donne $l_a$=50 mm.

Le fait de pouvoir séparer contribution de diffusion simple et contribution de diffusion multiple permet donc de mesurer de façon <u>distincte</u> les pertes par absorption des pertes par diffusion. Ici, l'échantillon étudié se trouve être beaucoup plus absorbant que diffusant puisqu'on trouve un libre parcours moyen élastique $l_e$ *~1000 mm* alors que le libre parcours d'absorption $l_a$ est de l'ordre de 50 *mm*.

Cette expérience montre que l'invention permet de mieux caractériser le milieu diffusant, en mesurant séparément des paramètres diffusifs (le, la) ce que l'échographie traditionnelle ne permet pas de faire. Ici, on a considéré un cas extrême (gel faiblement diffusant) où le rapport $I^M / I^S$ est particulièrement faible, mais la technique fonctionne également pour des milieux plus diffusants pour lesquels le rapport $I^M / I^S$ est proche de l'unité.

**Application 3 : imagerie ultrasonore du corps humain**

Le montage expérimental de la figure 1 a été utilisé pour imager le sein d'une volontaire, par échographie classique. L'image obtenue est représentée sur la figure 17.

En parallèle, on a utilisé la technique de filtrage 2 pour déterminer l'intensité multiplement diffusée $I^M$, comme dans l'application 2 ci-dessus et calculer ensuite un rapport $I^M/I$, où I est l'intensité diffusée totale, en fonction de la distance R mesurée selon l'axe Z (c'est à dire en fonction du temps t d'aller-retour de l'onde simplement diffusée). Les valeurs du rapport $I^M/I$, qui est un indice de fiabilité compris entre 0 et 1 représentatif de la quantité de diffusion multiple -et donc représentatif également de l'importance de la diffusion simple dans le milieu 1- ont été traduites en niveau de gris dans la barrette située en partie supérieure de la figure 17, qui permet ainsi de déterminer le rapport $I^M/I$ en fonction de t (Ce rapport pourrait être traduit en niveaux de couleurs ou par une courbe). Sur la figure 17, le trait vertical indique la limite de t (et donc de R) à partir de laquelle le rapport $I^M/I$ atteint un seuil critique (ici par exemple 0.5) au-delà duquel on ne peut plus faire confiance à l'image échographique, fondée sur le fait que la diffusion simple est prédominante.

On peut donc ainsi fournir une aide aux praticiens en matière d'imagerie médicale ou autre, en leur donnant une information supplémentaire quant à la fiabilité de l'image. En effet, lorsque la diffusion multiple devient prépondérante, l'image échographique n'a plus de sens et la diffusion multiple peut être une source d'erreurs.

**Autres applications :**

Concernant l'extraction de la diffusion simple et sa possible application à la détection d'une cible enfouie dans un milieu diffusant, deux exemples d'applications supplémentaires peuvent être cités :

- en contrôle non destructif (CND) : dans des matériaux comme le béton ou encore les aciers à grain, la diffusion multiple est loin d'être négligeable et la détection de fissures ou de défauts peut s'avérer difficile dans de tels milieux. L'extraction de la contribution de diffusion simple selon l'invention peut palier cet inconvénient.
- la détection de cibles enfouies dans la terre (par exemple objets solides, cavités, poches de fluides...) : le sol est un milieu diffusant vis à vis des ondes utilisées pour détecter les objets enfouis. Le filtrage de la diffusion simple selon l'invention, couplé à la méthode DORT, donne de bien meilleurs résultats que l'échographie standard dans de tels milieux.
- la technique de filtrage de la diffusion simple par projection suivant les antidiagonales peut également s'appliquer à des données tout simplement bruitées. C'est souvent le cas avec les données «réelles» comme en CND ou en acoustique sous marine où les rapports signal/bruit sont très faibles. Dans ce cas, la méthode DORT avec un filtrage préalable des antidiagonales donnera un résultat plus avantageux que celui obtenu en échographie en terme de probabilité de fausses alarmes. Cette méthode réduira également les effets d'aberration auxquels sont confrontées les techniques classiques d'imagerie.

Concernant l'extraction de la diffusion multiple et la possibilité d'effectuer une caractérisation du milieu à partir de ses paramètres diffusifs, là encore les possibilités d'application sont variées :

- l'imagerie médicale : souvent oubliée ou négligée dans les tissus mous du corps humain, la diffusion multiple des ultrasons existe bien. L'invention permet de l'extraire afin de caractériser les différents tissus sondés dans le corps humain. Cela permet de nouvelles mesures que l'échographie standard ne peut pas donner. Par exemple, en présence d'une tumeur, une vascularisation importante se met en place avec un réseau microscopique de vaisseaux pour alimenter celle-ci. On peut raisonnablement penser qu'une telle vascularisation conduit à une augmentation de l'intensité multiplement diffusée et serait donc détectable avec la technique de l'invention. Cela permettrait alors de quantifier l'angiogénèse des tumeurs et offrirait un meilleur diagnostic que celui qui est obtenu actuellement. Un autre exemple est donné par le suivi de l'ostéoporose. En effet les os, lorsqu'ils deviennent poreux, sont particulièrement diffusants. L'extraction de la diffusion multiple permettrait d'obtenir des mesures de paramètres diffusifs et d'imager la porosité locale de l'os.
- le contrôle non destructif : des matériaux comme les aciers à grain, le béton et plus généralement les milieux granulaires, sont le siège de diffusion multiple. L'extraction de la diffusion multiple, même en faible quantité, permettrait alors de caractériser et/ou d'imager les matériaux à partir de leur comportement diffusif et relier cela à la microarchitecture du matériau sondé.
- dans le domaine des mesures sismiques et études du sous-sol, la séparation des deux contributions de diffusion simple et multiple est également bénéfique.

**Revendications**

**1.**   Procédé de sondage par propagation d'ondes utilisant un ensemble (3) de transducteurs, ledit procédé comprenant :

(a) une étape d'émission au cours de laquelle on fait émettre par l'ensemble (3) de transducteurs une onde incidente dans un milieu (1) diffusant pour ladite onde,

(b) une étape de mesure au cours de laquelle on fait capter, par ledit ensemble (3) de transducteurs, des signaux représentatifs d'une onde réfléchie réverbérée par le milieu (1) à partir de l'onde incidente, lesdits signaux captés comprenant :

- une composante de diffusion simple, représentative de trajets d'onde où l'onde réfléchie résulte d'une seule réflexion de l'onde incidente par chaque diffuseur du milieu,
- et le cas échéant une composante de diffusion multiple, représentative de trajets d'onde où l'onde réfléchie résulte de plusieurs réflexions successives de l'onde incidente sur les diffuseurs du milieu avant d'atteindre l'ensemble de transducteurs,

(c) une étape de traitement au cours de laquelle on traite lesdits signaux captés en vue de déterminer des caractéristiques du milieu,

**caractérisé en ce qu'**au cours de l'étape de traitement (c), on extrait au moins une composante choisie parmi la composante de diffusion multiple et la composante de diffusion simple, par filtrage d'au moins une matrice de transfert fréquentielle représentative des réponses entre transducteurs de l'ensemble de transducteurs, l'étape de traitement (c) comportant au moins les sous-étapes suivantes :

(c1) une sous-étape de détermination de matrice de transfert fenêtrée au cours de laquelle on détermine au moins une matrice de transfert fréquentielle fenêtrée $K(T,f)=[k_{ij}(T,f)]$ correspondant à une matrice temporelle fenêtrée de réponse inter-éléments $K(T,t)=[k_{ij}(T,t)]$, ladite matrice temporelle fenêtrée de réponse inter-éléments correspondant, sur une fenêtre temporelle voisine d'un temps T et de durée $\Delta t$, aux réponses temporelles $h_{ij}$ (t) entre transducteurs de l'ensemble de transducteurs, f étant la fréquence,
(c3) une sous-étape de filtrage au cours de laquelle on sépare la composante de diffusion multiple de la composante de diffusion simple dans chaque matrice de transfert fréquentielle fenêtrée $K(T,f)$ en fonction de la cohérence des coefficients $k_{ij}(T,f)$ de la matrice de transfert fréquentielle fenêtrée $K(T,f)$ sur chaque antidiagonale de ladite matrice de transfert fréquentielle fenêtrée $K(T,f)$.

**2.** Procédé selon la revendication 1, dans lequel la composante de diffusion multiple est non nulle.

**3.** Procédé selon la revendication 1 ou la revendication 2, dans lequel au cours de l'étape de traitement (c), on extrait la composante de diffusion simple et on utilise ladite composante de diffusion simple pour détecter au moins un point singulier dans le milieu.

**4.** Procédé selon la revendication 3, dans lequel au cours de l'étape de traitement (c), on réalise une image du milieu à partir de ladite composante de diffusion simple.

**5.** Procédé selon la revendication 4, dans lequel au cours de l'étape de traitement (c), on détermine ladite composante de diffusion simple sous forme d'une matrice temporelle filtrée de réponse inter-éléments $H^F$, représentative des réponses entre transducteurs de l'ensemble de transducteurs, et on réalise l'image du milieu par formation de voie à partir de ladite matrice temporelle filtrée de réponse inter-éléments $H^F$.

**6.** Procédé selon la revendication 4, dans lequel au cours de l'étape de traitement (c), on détermine ladite composante de diffusion simple sous forme d'au moins une matrice de transfert fréquentielle filtrée $K^F$, représentative des réponses entre transducteurs de l'ensemble de transducteurs, et on réalise l'image du milieu par la méthode de décomposition de l'opérateur de retournement temporel $K^{F*}.K^F$, où $K^{F*}$ est la matrice conjuguée complexe de ladite matrice de transfert fréquentielle filtrée $K^F$.

**7.** Procédé selon la revendication 1 ou la revendication 2, dans lequel au cours de l'étape de traitement (c), on extrait la composante de diffusion multiple et on calcule à partir de ladite composante de diffusion multiple, un indice de fiabilité représentatif de l'importance de la diffusion simple dans le milieu.

**8.** Procédé selon la revendication 7, dans lequel au cours de l'étape de traitement (c), on réalise une image du milieu et on quantifie la fiabilité de ladite image en fonction dudit indice de fiabilité.

**9.** Procédé selon la revendication 8, dans lequel au cours de l'étape de traitement (c), on calcule en plusieurs points ledit indice de fiabilité et on quantifie la fiabilité de plusieurs parties de l'image correspondant auxdits plusieurs points, en fonction dudit indice de fiabilité.

**10.** Procédé selon l'une quelconque des revendications précédentes, dans lequel, au cours de la sous-étape de filtrage (c3), on extrait une composante de diffusion simple $k^S_{ij}(T,f)$ de chaque coefficient $k_{ij}(T,f)$ de la matrice K(T,f), telle que les composantes de diffusion simple $k^S_{ij}(T,f)$ soient cohérentes entre elles sur chaque antidiagonale de ladite matrice K(T,f).

**11.** Procédé selon l'une quelconque des revendications précédentes, dans lequel, au cours de la sous-étape de filtrage (c3), on extrait une composante de diffusion multiple $k^M_{ij}(T,f)$ de chaque coefficient $k_{ij}(T,f)$ de la matrice K(T,f).

**12.** Procédé selon l'une quelconque des revendications précédentes, dans lequel l'ensemble (3) de transducteurs comporte au moins un nombre N de transducteurs et la matrice de transfert fréquentielle fenêtrée K(T,f) est une matrice de dimension N*N.

**13.** Procédé selon l'une quelconque des revendications précédentes, dans lequel, au cours de la sous-étape (c1) de détermination de matrice de transfert fenêtrée, on détermine plusieurs matrices de transfert fenêtrées K(T,f) pour plusieurs valeurs de T et on procède à la sous-étape de filtrage (c3) pour chacune des matrices de transfert fenêtrées K(T,f).

**14.** Procédé selon la revendication 13, dans lequel les fenêtres temporelles des différentes matrices de transfert fenêtrées K(T,f) sont jointives.

**15.** Procédé selon l'une quelconque des revendications précédentes, dans lequel au cours de la sous-étape (c1) de détermination de matrice de transfert fenêtrée, on détermine chaque matrice fréquentielle fenêtrées K(T,f) par transformée de Fourier d'une matrice temporelle fenêtrée K(T,t) correspondant, sur ladite fenêtre temporelle voisine du temps T et de durée $\Delta t$, aux réponses temporelles $h_{ij}(t)$ entre transducteurs de l'ensemble de transducteurs.

**16.** Procédé selon l'une quelconque des revendications précédentes, dans lequel :

- l'étape de traitement (c) comporte en outre une sous-étape de rotation de données (c2) qui est intermédiaire entre la sous-étape (c1) de détermination de matrice de transfert fenêtrée et la sous-étape (c3) de filtrage, et au cours de laquelle on calcule deux matrices $A1(T,f)=[a1uv(T,f)]$ et $A2=[a2_{uv}(T,f)]$ à partir de K(T,f), où :

$$a1_{uv}(T,f)=k_{u+v-1,\ v-u+2M-1}(T,f),$$

$$a2_{uv}(T,f)=k_{u+v,\ v-u+2M-1}(T,f),$$

$$M=(N+3)/4,$$

N est une plus petite dimension de la matrice de transfert K(T,f) et est choisi pour que M soit entier,
- au cours de la sous-étape de filtrage (c3), on sépare la composante de diffusion multiple de la composante de diffusion simple dans chacune des matrices Ar, r étant un indice égal à 1 ou 2, et on obtient ainsi au moins deux matrices filtrées $Ar^F$ correspondant respectivement aux matrices Ar et représentatives chacune, soit de la composante de diffusion simple, soit de la composante de diffusion multiple,
- l'étape de traitement (c) comporte en outre une sous-étape de rotation de données inverse (c4), qui est postérieure à la sous-étape de filtrage (c3), et au cours de laquelle on calcule une matrice de transfert fenêtrée filtrée $K^F(T,f)=[k^F ij(T,f)]$, où :
- lorsque i-j est pair : $k^F_{ij}(T,f)=a1^F_{(i-j)/2+M,\ (i+j)/2}$,
- lorsque i-j est impair : $k^F_{ij}(T,f)=a2^F_{(i-j-1)/2+M,\ (i+j-1)/2}$.

**17.** Procédé selon la revendication 16, dans lequel au cours de la sous-étape de filtrage (c3), on calcule les deux matrices $Ar^F$ par la formule :

$Ar^F =S^tS*Ar$, où :

- S=[S$_u$] est un vecteur colonne, $^tS^*$ étant la transposée du vecteur conjugué du vecteur S,

- les composantes s$_u$ du vecteur S sont des nombres complexes égaux à :

$$s_u = \exp\left\{ j\frac{k}{2R} y_u^2 \right\} \bigg/ \sqrt{L} \,,$$

- k est le nombre d'onde,
- R=c.T/2,

$$- \ y_u = \left(x_i - x_j\right)\big/ \sqrt{2} \,, \quad \text{avec u=(i-j) /2+M si r=1 et u=(i-j-1)/2+M si r=2,}$$

- x$_i$ et x$_j$ sont les abscisses des transducteurs d'indices i et j selon un axe X, l'ensemble de transducteurs s'étendant au moins selon ledit axe X,
- L=2M-1 pour r=1 et L=2M-2 pour r=2,

lesdites matrices Ar$^F$ étant représentatives de la composante de diffusion simple.

**18.** Procédé selon la revendication 16, dans lequel au cours de la sous-étape de filtrage (c3) :

- on décompose en valeurs singulières chacune des matrices Ar en déterminant ainsi, pour chacune des matrices Ar, M valeurs singulières $\lambda_{i,r}$, i étant un indice compris entre 1 et M, les valeurs singulières étant ordonnées par ordre décroissant pour i croissant,
- pour chaque matrice Ar, on attribue à la diffusion simple p valeurs singulières les plus importantes $\lambda_{1,r}$ à $\lambda_{p,r}$, p étant compris entre 1 et M, et on attribue à la diffusion multiple les éventuelles autres valeurs singulières non nulles.

**19.** Procédé selon la revendication 18, dans lequel la détermination des p valeurs singulières attribuées à la diffusion simple est effectuée de manière itérative, comme suit :

(c31) on fixe initialement q = 1 ;

(c32) on calcule une valeur singulière normalisée à partir de $\lambda_{q,r}$ : $\quad \tilde{\lambda}_{q.r} = \dfrac{\lambda_{q.r}}{\sqrt{\dfrac{1}{Mr+1-q}\sum\limits_{m=q}^{Mr}\lambda_{m.r}^2}}\,, \quad$ avec

Mr=M si r=1 et Mr=M-1 si r=2,
(c33) si $\tilde{\lambda}_{q.r}$ est au moins égal à une valeur seuil prédéterminée $\tilde{\lambda}_{max}$, on attribue $\tilde{\lambda}_{q.r}$ à la diffusion simple et on réitère la sous-étape (c32) en incrémentant q d'une unité,
(c34) si $\tilde{\lambda}_{q.r}$ est inférieur à la valeur seuil $\tilde{\lambda}_{max}$, on attribue $\tilde{\lambda}_{q.r}$ et les éventuelles valeurs singulières suivantes à la diffusion multiple.

**20.** Procédé selon l'une quelconque des revendications précédentes, dans lequel lesdites ondes sont choisies parmi les ondes mécaniques et les ondes électromagnétiques.

**21.** Dispositif pour la mise en oeuvre d'un procédé de sondage selon l'une quelconque des revendications précédentes, comprenant un ensemble (3) de transducteurs adaptés pour émettre une onde incidente dans un milieu diffusant (1) et pour capter des signaux représentatifs d'une onde réfléchie réverbérée par le milieu à partir de l'onde incidente, lesdits signaux captés comprenant :

- une composante de diffusion simple, représentative de trajets d'onde où l'onde réfléchie résulte d'une seule réflexion de l'onde incidente par chaque diffuseur du milieu,
- et le cas échéant une composante de diffusion multiple, représentative de trajets d'onde où l'onde réfléchie résulte de plusieurs réflexions successives de l'onde incidente sur les diffuseurs du milieu avant d'atteindre l'ensemble de transducteurs,

ledit dispositif comportant en outre des moyens de traitement (5) adaptés pour traiter lesdits signaux captés en vue de déterminer des caractéristiques du milieu (1),

**caractérisé en ce que** les moyens de traitement (5) sont adaptés pour extraire au moins une composante choisie parmi la composante de diffusion multiple et la composante de diffusion simple, par filtrage d'au moins une matrice de transfert fréquentielle représentative des réponses entre transducteurs de l'ensemble de transducteurs, les moyens de traitement (5) étant adaptés pour :

- déterminer une matrice de transfert fenêtrée, en déterminant au moins une matrice de transfert fréquentielle fenêtrée $K(T,f)=[k_{ij}(T,f)]$ correspondant à une matrice temporelle fenêtrée de réponse inter-éléments $K(T,t)=[k_{ij}(T,t)]$, ladite matrice temporelle fenêtrée de réponse inter-éléments correspondant, sur une fenêtre temporelle voisine d'un temps T et de durée $\Delta t$, aux réponses temporelles $h_{ij}(t)$ entre transducteurs de l'ensemble de transducteurs, f étant la fréquence,

- séparer par filtrage la composante de diffusion multiple de la composante de diffusion simple dans chaque matrice de transfert fréquentielle fenêtrée $K(T,f)$ en fonction de la cohérence des coefficients $k_{ij}(T,f)$ de la matrice de transfert fréquentielle fenêtrée $K(T,f)$ sur chaque antidiagonale de ladite matrice de transfert fréquentielle fenêtrée $K(T,f)$.

**Claims**

1. A wave-propagation probing method using an array (3) of transducers, said method comprising:

   (a) a transmission step during which the transducer array (3) transmits an incident wave into a medium (1) that scatters said wave;

   (b) a measurement step during which said transducer array (3) captures signals representative of a reflected wave reverberated by the medium (1) on the basis of the incident wave, said captured signals comprising:

   - a single scattering component representative of wave paths in which the reflected wave results from a single reflection of the incident wave by each scatterer in the medium, and
   - as the case may be, a multiple scattering component representative of wave paths in which the reflected wave results from several successive reflections of the incident wave by the scatterers in the medium before reaching the transducer array; and

   (c) a processing step during which said captured signals are processed so as to determine characteristics of the medium,

   **characterized in that**, during the processing step (c), at least one component chosen from the multiple scattering component and the single scattering component is extracted, by filtering at least one frequency transfer matrix representative of the responses between transducers of the transducer array, the processing step (c) comprising at least the following substeps:

   (c1) a windowed transfer matrix determination substep during which at least one windowed frequency transfer matrix $K(T,f)=[k_{ij}(T,f)]$, corresponding to a windowed temporal inter-element response matrix $K(T,t)=[k_{ij}(T,t)]$, is determined, said windowed temporal inter-element response matrix corresponding, over a neighboring temporal window of time T and duration $\Delta t$, to the temporal responses $h_{ij}(t)$ between transducers of the transducer array, f being the frequency;

   (c3) a filtering substep during which the multiple scattering component is separated from the single scattering component in each windowed frequency transfer matrix $K(T,f)$ as a function of the coherence of the coefficients $k_{ij}(T,f)$ of the windowed frequency transfer matrix $K(T,f)$ along each antidiagonal of said windowed frequency transfer matrix $K(T,f)$.

2. The method as claimed in claim 1, in which the multiple scattering component is non-zero.

3. The method as claimed in claim 1 or claim 2, in which, during the processing step (c), the single scattering component is extracted and said single scattering component is used to detect at least one singular point in the medium.

4. The method as claimed in claim 3, in which, during the processing step (c), an image of the medium is produced on the basis of said single scattering component.

5. The method as claimed in claim 4, in which, during the processing step (c), said single scattering component in the form of a filtered temporal inter-element response matrix $H^F$, representative of the responses between transducers of the transducer array, is determined and the image of the medium is produced by path formation on the basis of said filtered temporal inter-element response matrix $H^F$.

6. The method as claimed in claim 4, in which, during the processing step (c), said single scattering component in the form of at least one filtered frequency transfer matrix $K^F$, representative of the responses between transducers of the transducer array, is determined and the image of the medium is produced by the method of decomposing the time reversal operator $K^{F*}.K^F$, in which $K^{F*}$ is the complex conjugate matrix of said filtered frequency transfer matrix $K^F$.

7. The method as claimed in claim 1 or claim 2, in which, during the processing step (c), the multiple scattering component is extracted and a reliability index representative of the magnitude of the single scattering in the medium is calculated from said multiple scattering component.

8. The method as claimed in claim 7, in which, during the processing step (c), an image of the medium is formed and the reliability of said image is quantified as a function of said reliability index.

9. The method as claimed in claim 8, in which, during the processing step (c), said reliability index is calculated at several points and the reliability of several parts of the image corresponding to said several points is quantified as a function of said reliability index.

10. The method as claimed in any one of the preceding claims, in which, during the filtering substep (c3), a single scattering component $k^S_{ij}(T,f)$ is extracted from each coefficient $k_{ij}(T,f)$ of the matrix $K(T,f)$, such that the single scattering components $k^S_{ij}(T,f)$ are mutually coherent along each antidiagonal of said matrix $K(T,f)$.

11. The method as claimed in any one of the preceding claims, in which, during the filtering substep (c3), a multiple scattering component $k^M_{ij}(T,f)$ is extracted from each coefficient $k_{ij}(T,f)$ of the matrix $K(T,f)$.

12. The method as claimed in any one of the preceding claims, in which the transducer array (3) comprises at least a number N of transducers and the windowed frequency transfer matrix $K(T,f)$ is an $N \times N$ matrix.

13. The method as claimed in any one of the preceding claims, in which, during the windowed transfer matrix determination substep (c1), several windowed transfer matrices $K(T,f)$ are determined for several values of T and the procedure passes to the filtering substep (c3) for each of the windowed transfer matrices $K(T,f)$.

14. The method as claimed in claim 13, in which the temporal windows of the various windowed transfer matrices $K(T,f)$ are contiguous.

15. The method as claimed in any one of the preceding claims, in which, during the windowed transfer matrix determination substep (c1), each windowed frequency matrix $K(T,f)$ is determined by the Fourier transform of a windowed temporal matrix $K(T,t)$ corresponding, over said neighboring temporal window of time T and duration $\Delta t$, to the temporal responses $h_{ij}(t)$ between transducers of the transducer array.

16. The method as claimed in any one of the preceding claims, in which:

- the processing step (c) further includes a data rotation substep (c2) which is intermediate between the windowed transfer matrix determination substep (c1) and the filtering substep (c3) and during which two matrices $A1(T,f)$ =$[a1_{uv}(T,f)]$ and $A2=[a2_{uv}(T,f)]$ are calculated from $K(T,f)$, in which:

$$a1_{uv}(T,f) = k_{u+v-1,\,v-u+2M-1}(T,f),$$

$$a2_{uv}(T,f) = k_{u+v,\,v-u+2M-1}(T,f),$$

$$M=(N+3)/4,$$

N is a smaller dimension of the transfer matrix K(T,f) and is chosen so that M is an integer;

- during the filtering substep (c3), the multiple scattering component is separated from the single scattering component in each of the matrices Ar, r being an index equal to 1 or 2, and at least two filtered matrices Ar$^F$ are thus obtained which correspond, respectively, to the matrices Ar and each being representative either of the single scattering component or of the multiple scattering component; and

- the processing step (c) furthermore includes an inverse data rotation substep (c4) which is after the filtering substep (c3) and during which a filtered windowed transfer matrix K$^F$(T,f)=[k$^F_{ij}$(T,f)] is calculated, where:
- when i-j is even: k$^F_{ij}$(T,f)=a1$^F$ $_{(i-j)/2+M, (i+j)/2,}$
- when i-j is odd: k$^F_{ij}$(T,f)=a2$^F$ $_{(i-j-1)/2+M, (i+j-1)/2.}$

**17.** The method as claimed in claim 16, in which, during the filtering substep (c3), the two matrices Ar$^F$ are calculated by the formula: Ar$^F$ = S$^t$S*Ar, in which:

- S=[s$_u$] is a column vector, $^t$S* being the transpose of the conjugate vector of the vector S;
- the components s$_u$ of the vector S are complex numbers equal to:

$$s_u = exp\left\{ j\frac{k}{2R} y^2_u \right\}\bigg/ \sqrt{L} \; ;$$

- k is the wavenumber;
- R=c.T/2;
- y$_u$ = (x$_i$-x$_j$)/-√2, with u=(i-j)/2+M if r=1 and u(i-j-1)/2+M if r=2;
- x$_i$ and x$_j$ are the abscissae of the transducers of indices i and j along an axis X, the transducer array extending at least along said axis XS; and
- L=2M-1 for r=1 and L=2M-2 for r=2,

said matrices Ar$^F$ being representative of the single scattering component.

**18.** The method as claimed in claim 16, in which, during the filtering substep (c3):

- each of the matrices Ar is decomposed into singular values, thus determining M singular values $\lambda_{i,r}$ for each of the matrices Ar, i being an index between 1 and M and the singular values being ordered in decreasing order for increasing i; and
- for each matrix Ar, the most important p singular values $\lambda_{1,r}$ to $\lambda_{p,r}$, p being between 1 and M, are assigned to the single scattering and the other possible non-zero singular values are assigned to the multiple scattering.

**19.** The method as claimed in claim 18, in which the p singular values assigned to the single scattering are determined iteratively as follows:

(c31) q is initially set to 1;

(c32) a normalized singular value is calculated from $\lambda_{q,r} : \tilde{\lambda}_{q,r} = \dfrac{\lambda_{q,r}}{\sqrt{\dfrac{1}{Mr+1-q}\displaystyle\sum_{m=q}^{Mr} \tilde{\lambda}^2_{m,r}}}$ , with Mr=M if r=1 and Mr=M-1 if r=2;

(c33) if $\tilde{\lambda}_{q,r}$ is at least equal to a predetermined threshold value $\tilde{\lambda}_{max}$, $\tilde{\lambda}_{q,r}$ is assigned to the single scattering and substep (c32) is repeated, q being incremented by unity; and

(c34) if $\tilde{\lambda}_{q,r}$ is below the threshold value $\tilde{\lambda}_{max}$, then $\tilde{\lambda}_{q,r}$ and the possible following singular values are assigned to the multiple scattering.

**20.** The method as claimed in any one of the preceding claims, in which said waves are chosen from mechanical waves and electromagnetic waves.

21. A device for implementing a probing method as claimed in any one of the preceding claims, comprising an array (3) of transducers designed to transmit an incident wave into a scattering medium (1) and to capture signals representative of a reflected wave reverberated by the medium on the basis of the incident wave, said captured signals comprising:

- a single scattering component representative of wave paths in which the reflected wave results from a single reflection of the incident wave by each scatterer in the medium; and
- as the case may be, a multiple scattering component representative of wave paths in which the reflected wave results from several successive reflections of the incident wave by the scatterers in the medium before reaching the transducer array,

said device furthermore including processing means (5) designed to process said captured signals for the purpose of determining characteristics of the medium (1),
**characterized in that** the processing means (5) are designed to extract at least one component chosen from the multiple scattering component and the single scattering component, by filtering at least one frequency transfer matrix representative of the responses between transducers of the transducer array, the processing means (5) being adapted for:

- determining a windowed transfer matrix, by determining at least one windowed frequency transfer matrix $K(T,f)=[k_{ij}(T,f)]$, corresponding to a windowed temporal inter-element response matrix $K(T,t)=[k_{ij}(T,t)]$, is determined, said windowed temporal inter-element response matrix corresponding, over a neighboring temporal window of time T and duration $\Delta t$, to the temporal responses $h_{ij}(t)$ between transducers of the transducer array, f being the frequency;
- separating by filtering, the multiple scattering component from the single scattering component in each windowed frequency transfer matrix $K(T,f)$ as a function of the coherence of the coefficients $k_{ij}(T,f)$ of the windowed frequency transfer matrix $K(T,f)$ along each antidiagonal of said windowed frequency transfer matrix $K(T,f)$.

## Patentansprüche

1. Messverfahren durch Wellenausbreitung unter Verwendung einer Wandleranordung (3), wobei das Verfahren umfasst:

(a) einen Emissionsschritt, während dem man die Wandleranordnung (3) eine in ein die Welle streuendes Medium (1) einfallende Welle ausgeben lässt,
(b) einen Messschritt, während dem man die Wandleranordnung (3) Signale empfangen lässt, die für eine reflektierte und durch das Medium (1) ausgehend von der einfallenden Welle zurückgeworfene Welle repräsentativ sind, wobei die empfangenen Signale umfassen:

- eine Einfachstreuungskomponente, welche für diejenigen Wellenbahnen repräsentativ ist, bei welchen die reflektierte Welle aus einer einzigen Reflektion der einfallenden Welle durch jeden Diffusor des Mediums resultiert,
- und gegebenenfalls eine Mehrfachstreuungskomponente, die für diejenigen Wellenbahnen repräsentativ ist, bei welchen die reflektierte Welle aus mehreren aufeinander folgenden Reflektionen der auf die Diffusoren des Mediums vor Erreichen der Wandleranordnung einfallenden Welle resultiert,

(c) einen Verarbeitungsschritt, während dem die erfassten Signale verarbeitet werden, um die Merkmale des Mediums zu bestimmen,

**dadurch gekennzeichnet, dass** im Verlauf des Verarbeitungsschritts (c) wenigstens eine aus der Mehrfachstreuungskomponente und der Einfachstreuungskomponente ausgewählte Komponente durch Filtern wenigstens einer Frequenzübertragungsmatrix, die für die Reaktionen zwischen den Wandlern der Wandleranordnung repräsentativ ist, extrahiert wird, wobei der Verarbeitungsschritt (c) wenigstens die folgenden Teilschritte umfasst:

(c1) einen Teilschritt zur Bestimmung der fensterbasierten Übertragungsmatrix, während dem wenigstens eine fensterbasierte Frequenzübertragungsmatrix $K(T,f)=[k_{ij}(T,f)]$ bestimmt wird, die einer fensterbasierten, temporären Matrix interelementarer Reaktionen K(T,t)=[$k_{ij}$(T,t)] entspricht, wobei die fensterbasierte, temporäre Matrix interelementarer Reaktionen über ein benachbartes Zeitfenster einer Zeit T und einer Dauer $\Delta t$ den temporären Reaktionen $h_{ij}$(t) zwischen den Wandlern der Wandleranordnung entspricht, wobei f die Frequenz ist,

(c3) einen Teilschritt zur Filtrierung, während dem die Mehrfachstreuungskomponente von der Einfachstreuungskomponente in jeder fensterbasierten Frequenzübertragungsmatrix K(T,f) abhängig von der Kohärenz der Koeffizienten $k_{ij}$(T,f) der fensterbasierten Frequenzübertragungsmatrix K(T,f) auf jeder Antidiagonalen der fensterbasierten Frequenzübertragungsmatrix K(T,f) getrennt wird.

2. Verfahren nach Anspruch 1, bei welchem die Mehrfachstreuungskomponente ungleich Null ist.

3. Verfahren nach Anspruch 1 oder Anspruch 2, bei welchem während des Verarbeitungsschrittes (c) die Einfachstreuungskomponente extrahiert wird und diese Einfachstreuungskomponente dazu verwendet wird, wenigstens einen Einzelpunkt in dem Medium zu erfassen.

4. Verfahren nach Anspruch 3, bei welchem während des Verarbeitungsschrittes (c) ausgehend von der Einfachstreuungskomponente ein Abbild des Mediums erstellt wird.

5. Verfahren nach Anspruch 4, bei welchem während des Verarbeitungsschrittes (c) die Einfachstreuungskomponente in Form einer für die Reaktionen zwischen Wandlern der Wandleranordnung repräsentativen, gefilterten temporären Matrix interelementarer Reaktionen $H^F$ bestimmt wird und ein Abbild des Mediums durch Strahlformung auf der Basis der gefilterten temporären Matrix interelementarer Reaktionen $H^F$ erstellt wird.

6. Verfahren nach Anspruch 4, bei welchem während des Verarbeitungsschrittes (c) die Einfachstreuungskomponente in Form wenigstens einer für die Reaktionen zwischen Wandlern der Wandleranordnung repräsentativen, gefilterten Frequenzübertragungsmatrix $K^F$ bestimmt wird und ein Abbild des Mediums mittels der Methode der Zerlegung des Zeitinversionsoperators $K^{F*}.K^F$ erstellt wird, wobei es sich bei $K^{F*}$ um die konjugierte komplexe Matrix der gefilterten Frequenzübertragungsmatrix $K^F$ handelt.

7. Verfahren nach Anspruch 1 oder Anspruch 2, bei welchem während des Verarbeitungsschrittes (c) die Mehrfachstreuungskomponente extrahiert wird und basierend auf dieser Mehrfachstreuungskomponente ein für den Umfang der Einfachstreuung im Medium repräsentativer Zuverlässigkeitsindex berechnet wird.

8. Verfahren nach Anspruch 7, bei welchem während des Verarbeitungsschrittes (c) ein Abbild des Mediums erstellt wird und die Zuverlässigkeit des Bilds basierend auf dem Zuverlässigkeitsindex quantifiziert wird.

9. Verfahren nach Anspruch 8, bei welchem während des Verarbeitungsschrittes (c) für mehrere Punkte der Zuverlässigkeitsindex berechnet wird und die Zuverlässigkeit mehrerer Abschnitte des Bilds, die den mehreren Punkten entsprechen, in Abhängigkeit von dem Zuverlässigkeitsindex quantifiziert wird.

10. Verfahren nach einem der vorangehenden Ansprüche, bei welchem während des Filtrierungsunterschritts (c3) eine Einfachstreuungskomponente $k^s_{ij}$(T,f) jedes Koeffizienten $k_{ij}$(T,f) der Matrix K(T,f) extrahiert wird, so dass die Einfachstreuungskomponenten $k^s_{ij}$(T,f) untereinander auf jeder Antidiagonalen der Matrix K(T,f) kohärent sind.

11. Verfahren nach einem der vorangehenden Ansprüche, bei welchem während des Filtrierungsunterschritts (c3) eine Mehrfachstreuungskomponente $k^M_{ij}$(T,f) jedes Koeffizienten $k_{ij}$(T,f) der Matrix K(T,f) extrahiert wird.

12. Verfahren nach einem der vorangehenden Ansprüche, bei welchem die Wandleranordnung (3) wenigstens eine Anzahl N Wandler umfasst und die fensterbasierte Frequenzübertragungsmatrix K(T,f) eine Matrix der Abmessung N*N ist.

13. Verfahren nach einem der vorangehenden Ansprüche, bei welchem während des Unterschritts (c1) zur Bestimmung der fensterbasierten Übertragungsmatrix mehrere fensterbasierte Übertragungsmatrizen K(T,f) für mehrere Werte von T bestimmt werden und der Unterschritt des Filterns (c3) für jede der fensterbasierten Übertragungsmatrizen K(T,f) durchgeführt wird.

14. Verfahren nach Anspruch 13, bei welchem die temporären Fenster der verschiedenen fensterbasierten Übertragungsmatrizen K(T,f) aneinander anschließen.

15. Verfahren nach einem der vorangehenden Ansprüche, bei welchem während des Unterschritts (c1) zur Bestimmung der fensterbasierten Übertragungsmatrix jede fensterbasierte Frequenzmatrix K(T,f) durch Fourier-Transformation einer entsprechenden temporären, fensterbasierten Matrix K(T,f) über das benachbarte Zeitfenster der Zeit T und der Dauer $\Delta$t mit den temporären Reaktionen $h_{ij}(t)$ zwischen den Wandlern der Wandleranordnung bestimmt wird.

16. Verfahren nach einem der vorangehenden Ansprüche, bei welchem:

- der Verarbeitungsschritt (c) ferner einen Unterschritt der Datenrotation (c2) umfasst, der zwischen dem Unterschritt (c1) zur Bestimmung der fensterbasierten Übertragungsmatrix und dem Unterschritt (c3) des Filterns angeordnet ist, und in dessen Verlauf zwei Matrizen A1 (T,f)=[a1$_{uv}$(T,f)] und A2=[a2$_{uv}$(T,f)] basierend auf K(T, f) berechnet werden, wobei:

$$a1_{uv}(T,f)=k_{u+v-1,\ v-u+2M-1}(T,f),$$

$$a2_{uv}(T,f)=k_{u+v,\ v-u+2M-1}(T,f),$$

$$M=(N+3)/4,$$

N eine kleinere Abmessung der Übertragungsmatrix K(T,f) ist und gewählt wird, damit M ganzzahlig ist,
- während des Unterschritts des Filterns (c3) die Mehrfachstreuungskomponente von der Einfachstreuungskomponente in jeder der Matrizen Ar getrennt wird, wobei r ein Index von 1 oder 2 ist, und man so wenigstens zwei gefilterte Matrizen Ar$^F$ erhält, die jeweils den Matrizen Ar entsprechen und für die Einfachstreuungskomponente beziehungsweise für die Mehrfachstreuungskomponente repräsentativ sind,
- der Verarbeitungsschritt (c) ferner einen Unterschritt der umgekehrten Datenrotation (c4) umfasst, der nach dem Unterschritt des Filterns (c3) erfolgt und während dem eine gefilterte fensterbasierte Übertragungsmatrix K$^F$(T,f)=[k$^F_{ij}$(T,f)] berechnet wird, wobei gilt:
- wenn i-j gerade ist: k$^F_{ij}$(T,f)=a1$^F_{(i-j)/2+M,\ (i+j)/2}$,
- wenn i-j ungerade ist: k$^F_{ij}$(T,f)=a2$^F_{(i-j-1)/2+M,\ (i+j-1)/2}$.

17. Verfahren nach Anspruch 16, bei welchem während des Unterschritts des Filterns (c3) die zwei Matrizen Ar$^F$ mittels folgender Formel berechnet werden:

A$r^F$=S$^t$S*A$r$, wobei gilt:

- S=[S$_u$] ist ein Spaltenvektor, wobei $^t$S* die Umsetzung des konjugierten Vektors des Vektors S ist,
- die Komponenten s$_u$ des Vektors S sind komplexe Zahlen gleich:

$$s_u=\exp\left\{j\frac{k}{2R}y^2_u\right\}\Big/\sqrt{L}$$

- k ist die Wellenanzahl,
- R=c.T/2,

- $y_u=(x_i-x_j)/\sqrt{2}$ mit u=(i-j)/2+M, wenn r=1 und u=(i-j-1)/2+M wenn r=2,

- x$_i$ und X$_j$ sind die Abszissen der Wandler mit den Indizes i und j gemäß einer Achse X, wobei sich die Gesamtheit der Wandler wenigstens gemäß dieser Achse X erstreckt,
- L=2M-1 für r=1 und L=2M-2 für r=2,

wobei die Matrizen Ar$^F$ repräsentatif für die Einfachstreuungskomponente sind.

18. Verfahren nach Anspruch 16, bei welchem während des Unterschritts des Filterns (c3):

EP 2 294 452 B1

- jede der Matrizen Ar in Einzelwerte zerlegt wird und so für jede der Matrizen Ar M Einzelwerte $\lambda_{i,r}$ bestimmt werden, wobei i ein Index zwischen 1 und M ist, wobei die Einzelwerte in absteigender Reihenfolge für aufsteigende Werte für i angeordnet sind,
- für jede Matrix Ar die wichtigsten Einzelwerte $\lambda_{i,r}$ bis $\lambda_{p,r}$ der Einfachstreuung p zugeordnet, wobei p zwischen 1 und M liegt, und die möglichen anderen Einzelwerte ungleich Null der Mehrfachstreuung zugeordnet werden.

19. Verfahren nach Anspruch 18, bei welchem die Bestimmung der p der Einfachstreuung zugeordneten Einzelwerte wiederholt geschieht, wie folgt:

   (c31) q=1 wird zu Beginn festgelegt;
   (c32) ein genormter Einzelwert wird ausgehend von $\lambda_{q,r}$ berechnet:
   mit Mr=M für r=1 und Mr=M-1 für r=2.
   (c33) wenn $\lambda_{q,r}$ wenigstens gleich einem vorbestimmten Schwellenwert $\lambda_{max}$ ist, wird $\lambda_{q,r}$ der Einfachstreuung zugeordnet und der Unterschritt (c32) wird wiederholt, wobei q um eine Einheit erhöht wird,
   (c34) wenn $\lambda_{q,r}$ kleiner als der Schwellenwert $\lambda_{max}$ ist, werden $\lambda_{q,r}$ und die möglichen folgenden Einzelwerte der Mehrfachstreuung zugeordnet.

20. Verfahren nach einem der vorangehenden Ansprüche, bei welchem die Wellen aus mechanischen Wellen und elektromagnetischen Wellen gewählt werden.

21. Vorrichtung zur Umsetzung eines Messverfahrens nach einem der vorangehenden Ansprüche, welche eine Wandleranordnung (3) umfasst, die dazu ausgelegt ist, eine in ein die Welle streuendes Medium (1) einfallende Welle auszugeben und Signale zu empfangen, die für eine reflektierte und durch das Medium ausgehend von der einfallenden Welle zurückgeworfene Welle repräsentativ sind, wobei die empfangenen Signale umfassen:

   - eine Einfachstreuungskomponente, welche für diejenigen Wellenbahnen repräsentativ ist, bei welchen die reflektierte Welle aus einer einzigen Reflektion der einfachen Welle durch jeden Diffusor des Mediums resultiert,
   - und gegebenenfalls eine Mehrfachstreuungskomponente, die für diejenigen Wellenbahnen repräsentativ ist, bei welchen die reflektierte Welle aus mehreren aufeinander folgenden Reflektionen der auf die Diffusoren des Mediums vor Erreichen der Wandleranordnung einfallenden Welle resultiert,

   wobei die Vorrichtung ferner Verarbeitungsmittel (5) umfasst, welche dazu ausgelegt sind, die empfangenen Signale zu verarbeiten, um die Merkmale des Mediums (1) zu bestimmen,
   **dadurch gekennzeichnet, dass** die Verarbeitungsmittel (5) dazu ausgelegt sind, wenigstens eine aus der Mehrfachstreuungskomponente und der Einfachstreuungskomponente ausgewählte Komponente durch Filtern wenigstens einer Frequenzübertragungsmatrix, die für die Reaktionen zwischen den Wandlern der repräsentativ ist, zu extrahieren, wobei die Verarbeitungsmittel (5) dazu ausgelegt sind:

   - eine fensterbasierte Übertragungsmatrix durch Bestimmen wenigstens einer fensterbasierten Frequenzübertragungsmatrix $K(T,f)=[k_{ij}(T,f)]$ zu bestimmen, die einer fensterbasierten, temporären Matrix interelementarer Reaktionen $K(T,t)=[k_{ij}(T,t)]$ entspricht, wobei die fensterbasierte, temporäre Matrix interelementarer Reaktionen über ein benachbartes Zeitfenster einer Zeit T und einer Dauer $\Delta t$ den temporären Reaktionen $h_{ij}(t)$ zwischen den Wandlern der Wandleranordnung entspricht, wobei f die Frequenz ist,

   Trennen durch Filtern der Mehrfachstreuungskomponente von der Einfachstreuungskomponente in jeder fensterbasierten Frequenzübertragungsmatrix $K(T,f)$ abhängig von der Kohärenz der Koeffizienten $k_{ij}(T,f)$ der fensterbasierten Frequenzübertragungsmatrix $K(T,f)$ auf jeder Antidiagonalen der fensterbasierten Frequenzübertragungsmatrix $K(T,f)$.

30

FIG.1.

FIG.2.

FIG.3.

FIG.4.

FIG.5.

$A_1^F, A_2^F$

$K^F$

$K$

FIG.6.

SVD

$q=1$

$\tilde{\lambda}q$

$q=q+1$

$\tilde{\lambda}q > \lambda_{max}$

si $\tilde{\lambda}q < \lambda_{max}$

$$A^S = \sum_{i=1}^{q-1} \lambda_i \, U_i \, {}^t V_i^*$$

$$A^M = \sum_{i=q}^{M} \lambda_i \, U_i \, {}^t V_i^*$$

FIG.7.

FIG.8.

FIG.9.

FIG.10.

FIG.11.

FIG.12.

## FIG.13.

$$\frac{I^M}{I} < 0{,}5 \qquad \frac{I^M}{I} > 0{,}5$$

FIG.17.

FIG.14.

FIG.15.

FIG.16.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004086557 A

**Littérature non-brevet citée dans la description**

- **A.M. SENGUPTA ; P.P. MITRA.** Distributions of singular values for some random matrices. *Phys. Rev. E,* 1999, vol. 60 (3), 3389-3392
- Eigenmodes of the time reversal operator : a solution to selective focusing in multiple-target media. **PRADA et al.** Wave Motion. Elsevier Science B.V, 1994, vol. 20, 151-163
- **J. PAASSCHENS.** Solution of the time-dependent Boltzmann equation. *Phys. Rev. E,* 1997, vol. 56 (1), 1135-1141